(19) Europäisches Patentamt
European Patent Office
Office européen des brevets

(11) EP 2 938 660 B1

(12) # FASCICULE DE BREVET EUROPEEN

(45) Date de publication et mention de la délivrance du brevet:
**11.10.2017 Bulletin 2017/41**

(21) Numéro de dépôt: **13827015.2**

(22) Date de dépôt: **19.12.2013**

(51) Int Cl.:
***C08J 7/04*** (2006.01) ***C08J 3/05*** (2006.01)

(86) Numéro de dépôt international:
**PCT/FR2013/053180**

(87) Numéro de publication internationale:
**WO 2014/102487 (03.07.2014 Gazette 2014/27)**

(54) **PROCEDE D'ENDUCTION D'UN SUPPORT AVEC UNE DISPERSION A BASE DE POLYMERE ACRYLIQUE ET DE RETICULANT**

VERFAHREN ZUM BESCHICHTEN EINES TRÄGERS MIT EINER DISPERSION AUF DER BASIS EINES ACRYLPOLYMERS UND VERNETZUNGSMITTELS

METHOD FOR COATING A SUPPORT WITH A DISPERSION BASED ON AN ACRYLIC POLYMER AND A CROSS-LINKING AGENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.12.2012 FR 1262826**

(43) Date de publication de la demande:
**04.11.2015 Bulletin 2015/45**

(73) Titulaire: **Toray Films Europe**
**01700 Saint-Maurice-de-Beynost (FR)**

(72) Inventeurs:
- **OUZINEB, Keltoum**
**F-69100 Villeurbanne (FR)**
- **PENACHE, Maria Cristina**
**F-38230 Chavanoz (FR)**

(74) Mandataire: **Cabinet Plasseraud**
**235 Cours Lafayette**
**69006 Lyon (FR)**

(56) Documents cités:
**EP-A1- 0 260 203** **EP-A2- 0 317 858**
**EP-A2- 0 400 801** **EP-A2- 0 576 169**
**WO-A1-96/19528** **GB-A- 2 014 083**
**NL-A- 7 610 633** **US-A- 4 310 600**

Remarques:
Le dossier contient des informations techniques présentées postérieurement au dépôt de la demande et ne figurant pas dans le présent fascicule.

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

**Description**

## Domaine de l'invention

Le domaine de l'invention est celui des films plastiques notamment polyesters. La présente invention a pour objet un nouveau procédé d'enduction d'un support, de préférence un film en polyester, avec un enduit destiné à améliorer la liaison entre ledit support et une couche externe active (revêtement).

## Généralités - Problème technique - Art antérieur

Les films plastiques de type polyester sont bien connus pour leurs excellentes propriétés de stabilité thermique, de stabilité dimensionnelle, de résistance chimique et d'énergie de surface relativement haute. Ce sont des supports très résistants et particulièrement recherchés pour des revêtements filmogènes variés conduisant à des matériaux composites trouvant de nombreuses applications : emballage alimentaire ou non, protection de support, films ou feuilles pour l'art graphique (impression ou dessin), films métallisés. Cependant, pour des applications à hautes contraintes, ces supports présentent l'inconvénient d'une adhésion insuffisante desdits revêtements filmogènes sur les supports, en particulier sur des films en polyester, rendant ainsi leur utilisation inefficace et/ou non fiable et donc impropre. En effet, il est connu que les revêtements métalliques de film PET n'adhèrent pas correctement au film, en particulier en conditions humides et sous haute température, comme cela est le cas dans les procédés de remplissage à chaud, pasteurisation et stérilisation. Ce manque ou perte d'adhérence implique que l'effet barrière à l'oxygène et à la vapeur d'eau attendu par le revêtement est perdu, ce qui provoque une altération du contenu alimentaire et un risque pour la santé.

Pour tenter de résoudre ce problème, plusieurs solutions ont été proposées pour améliorer la liaison entre le support et son revêtement. Ainsi, les traitements physiques (traitement à la flamme, décharges corona, traitement abrasif) ou physico-chimiques (traitements par un acide, greffage de fonctions chimiques) à la surface des films ont été testés. Ces divers traitements présentant de nombreux inconvénients, l'application d'un enduit intermédiaire a été préférée. Cet enduit intermédiaire présente l'avantage d'avoir une bonne adhérence au support et une bonne adhérence au revêtement définitif propre à chaque utilisation. Il correspond à une couche primaire d'accrochage et pourra être appelé ainsi par la suite. De nombreux polymères ou copolymères ont été proposés pour la réalisation de cette couche primaire. Les brevets US 2 794 742, US 2 627 088 et FR 1 428 831 indiquent clairement que les polymères qui conviennent le mieux en tant que primaire d'accrochage sont des polymères acryliques. La mise en place de cette couche primaire d'accrochage ou d'adhérence est réalisée par enduction de solutions organiques ou d'émulsions aqueuses. Toutefois, bien que ces polymères acryliques améliorent nettement l'adhérence des revêtements finaux au film de polyester support, cette solution présente l'inconvénient de devoir adapter la couche primaire acrylique à chaque type de revêtement final et donc à chaque utilisation du film revêtu pour avoir la meilleure adhérence possible. Ceci nécessite d'avoir un panel de solutions différentes pour l'industriel. Il a donc été recherché une primaire améliorant l'adhérence du revêtement final à son support qui soit la plus universelle possible permettant ainsi de s'affranchir de l'étape d'adaptation/modification de la composition de la primaire pour convenir à chaque nature de revêtement final. La demande de brevet EP 0 260 203 B1 vise à obtenir une telle primaire d'accrochage universelle pour film polyester. Cette demande de brevet décrit un polymère modifié obtenu par polymérisation radicalaire en phase aqueuse d'au moins un monomère de nature acrylique en présence d'une quantité efficace d'un polyester dissipable dans l'eau, dérivé d'au moins un acide aromatique dicarboxylique et d'au moins un diol aliphatique et comportant une pluralité de groupes sulfonyloxy. L'adhérence de revêtements finaux appliqués sur des films PET enduits de cette primaire d'adhérence (appelée aussi « latex » dans ladite demande EP 0 260 203 B1) a été testée. Bien que les résultats d'adhérence soient bons, ils sont pour autant perfectibles. Le document EP 0 400 801 A2 enseigne un procédé similaire.

## Objectifs de l'invention

L'invention vise à atteindre au moins l'un des objectifs essentiels énumérés ci-après.

L'un des objectifs essentiels de la présente invention est de fournir un support, de préférence un film polyester, enduit d'une nouvelle composition de primaire d'accrochage pour un revêtement final donnant des résultats nettement améliorés d'adhérence entre le support et le revêtement final.

Un autre objectif essentiel de la présente invention est de fournir un film polyester enduit et revêtu, offrant des propriétés barrière accrues, en particulier barrière à l'oxygène et à la vapeur d'eau.

Un autre objectif essentiel de la présente invention consiste à fournir un nouveau film polyester métallisable et/ou imprimable.

Un autre objectif essentiel de la présente invention consiste à fournir un nouveau film polyester enduit et revêtu d'une couche de métal et/ou d'oxyde de métal ayant des propriétés accrues d'adhérence entre le support et le revêtement métal et des propriétés accrues de barrière sous haute température et en conditions humides.

Un autre objectif essentiel de la présente invention consiste à fournir un nouveau film polyester insensible à l'eau.
Un autre objectif essentiel de la présente invention consiste à fournir un nouveau procédé d'enduction d'un support, de préférence un film polyester, avec une couche primaire d'accrochage permettant d'obtenir des propriétés d'adhérence entre le support et le revêtement final nettement accrues.
Un autre objectif essentiel de la présente invention consiste à fournir un nouveau procédé de revêtement d'un film polyester enduit d'une couche primaire d'accrochage donnant des propriétés barrière et d'adhérence accrues.
Un autre objectif essentiel de la présente invention consiste à fournir de nouvelles utilisations d'un support enduit de la primaire d'accrochage et revêtu d'une couche de métal et/ou d'oxyde de métal, ou d'une couche d'encre, ou d'une couche d'adhésif, à savoir notamment l'emballage, de préférence d'aliments, la décoration, l'impression et/ou la protection de supports divers.
Un autre objectif essentiel de la présente invention est de fournir une nouvelle dispersion destinée à être enduite sur un support, ayant reçu un traitement physique ou non au préalable, et à favoriser une réticulation interfaciale en vue d'améliorer l'adhésion d'un revêtement et les propriétés physiques du support final.

## Description succincte de l'invention

Ces objectifs, parmi d'autres, sont atteints par la présente invention qui concerne, dans un premier aspect, un procédé d'enduction d'un support avec au moins une couche de primaire d'accrochage, selon la revendication 1. Suivant un autre de ses aspects, l'invention concerne un procédé d'enduction d'un support avec au moins une couche de primaire d'accrochage tel que décrit précédemment et comprenant en outre deux étapes d'étirage perpendiculaire du support dont au moins une étape est réalisée avant ou après les étapes b) ou c), afin d'obtenir un étirage final bi-dimensionnel.
Suivant un autre de ses aspects, l'invention concerne un procédé d'enduction d'un support avec au moins une couche de primaire d'accrochage tel que défini ci-dessus caractérisé en ce que les étapes b) et c) sont effectuées en ligne, c'est-à-dire que le traitement physique et l'application de la dispersion aqueuse contenant les particules de polymères acryliques et le réticulant ne nécessite pas d'extraire le film de la ligne de production. L'étape d'enduction se fait au cours de la production du film enduit, de préférence entre les deux étapes d'étirage du film (cf. Fig. 6).
Suivant encore un autre de ses aspects, la présente invention concerne un procédé d'enduction d'un support tel que décrit-ci-dessus, dans lequel le support de l'étape a) est un film en polyester, de préférence en polyéthylène téréphtalate (PET), d'épaisseur A telle que :

$A \leq 150\ \mu m$,
de préférence $4\ \mu m \leq A \leq 100\ \mu m$,
plus préférentiellement $4\ \mu m \leq A \leq 40\ \mu m$,
plus préférentiellement encore $4\ \mu m \leq A \leq 12\ \mu m$.

Suivant un autre de ses aspects, la présente invention concerne un procédé d'enduction tel que défini ci-dessus, caractérisé en ce que la couche de primaire d'accrochage a une épaisseur E telle que :

$E \leq 200$ nm,
de préférence $40\ nm \leq E \leq 120$ nm,
plus préférentiellement $50\ nm \leq E \leq 100$ nm,
plus préférentiellement encore $60\ nm \leq E \leq 90$ nm.

Suivant un autre de ses aspects, la présente invention concerne un procédé de revêtement d'un support enduit d'au moins une couche de primaire d'accrochage tel qu'obtenu par le procédé tel que défini ci-dessus, caractérisé en ce qu'il comprend une étape d'application d'un revêtement apte à réagir avec la couche primaire d'accrochage. Ce revêtement comprend :

- au moins une couche d'au moins un métal et/ou au moins un oxyde métallique, ou
- au moins une couche d'encre, ou
- au moins une couche d'adhésif.

Suivant un autre de ses aspects, la présente invention concerne un procédé de revêtement tel que défini ci-dessus, caractérisé en ce que le revêtement consiste en une couche de métal et/ou d'oxyde métallique, le métal (ou les métaux) étant choisi(s) parmi l'aluminium, le cuivre, le nickel, l'argent, l'or, et leurs alliages et le(s) oxyde(s) métallique(s) étant choisi(s) parmi les oxydes de l'aluminium, de silicium, de cuivre, de nickel, d'argent et leurs mélanges.
Suivant un autre de ses aspects, la présente invention concerne un procédé d'enduction d'un support tel que défini ci-dessous ou de revêtement d'un support enduit tel que défini ci-dessus dans lequel au moins une partie de la

surface du support est modifiée par une décharge électrique de type corona sous air ambiant ou gaz.

Selon encore un autre de ses aspects, la présente invention concerne un article choisi dans le groupe constitué par des emballages alimentaires et non-alimentaires, les films ou feuilles pour l'art graphique (impression ou dessin), les films ou feuilles pour la décoration et les films ou feuilles pour la protection de support, caractérisé en ce qu'il comprend un support tel qu'obtenu à l'issu du procédé de revêtement tel que défini ci-dessus.

Selon un dernier aspect, l'invention concerne une dispersion aqueuse, notamment pour la mise en oeuvre du procédé tel que défini ci-dessus, selon la revendication 11.

## Description détaillée de l'invention

### Le support

Le support pour le procédé d'enduction est un support solide. On utilise tout particulièrement, un film de polyester qui est un produit de polycondensation d'un ou plusieurs acides dicarboxyliques aromatiques (acide téréphtalique, acide isophtalique par exemple) ou de leurs dérivés (halogénures, esters) avec au moins un alcoylèneglycol (éthylèneglycol ; propane-1,3-diol ; butane-1,4-diol par exemple). De préférence, il s'agit de polyesters dérivés de l'acide téréphtalique ou d'un mélange d'acide téréphtalique et d'un autre acide aromatique dicarboxylique (acide isophtalique par exemple), la teneur du mélange en acide téréphtalique étant suffisante pour que le polymère soit essentiellement cristallin après étirage.

De préférence, pour la mise en oeuvre de l'invention, on utilise des polyesters linéaires filmogènes, cristallisables par orientation et obtenus de façon usuelle à partir d'un ou plusieurs acides aromatiques dicarboxyliques ou leurs dérivés (esters d'alcools aliphatiques inférieurs ou halogénures par exemple) et d'un ou plusieurs diols (glycols) aliphatiques.

Le polyester constituant le film de base peut être choisi parmi les polyesters auxquels on fait appel habituellement pour l'obtention de films semi-cristallins bi-orientés. Comme exemples d'acides aromatiques, on peut citer les acides phtaliques, téréphtaliques, isophtaliques, naphtalène-2,5-dicarboxyliques, et naphtalène-2,6-dicarboxyliques. Ces acides peuvent être associés à une quantité mineure d'un ou plusieurs acides dicarboxyliques aliphatiques ou cycloaliphatiques, tels que les acides adipiques, azélaïques, tétra- ou hexahydrotéréphtaliques.

Comme exemples non limitatifs de diols aliphatiques, on peut citer l'éthylèneglycol, le propane-1,3-diol et le butane-1,4-diol. Ces diols peuvent être associés à une quantité mineure d'un ou plusieurs diols aliphatiques plus condensés en carbone (néopentylglycol par exemple) ou cycloaliphatiques (cyclohexanedimethanol par exemple).

Préférentiellement, les polyesters filmogènes cristallisables sont des polytéréphtalates ou des polynaphtalènedicarboxylates d'alkylènediol et, en particulier, le polytéréphtalate d'éthylèneglycol (PET) ou de butane-1,4-diol ou des copolyesters comportant au moins 80% en moles de motifs téréphtalate d'éthylèneglycol. Avantageusement, le polyester est un polytéréphtalate d'éthylèneglycol dont la viscosité intrinsèque mesurée à 25°C dans l'ortho-chlorophénol est comprise entre 0,6 dl/g et 0,75 dl/g.

Les films de polyester bi-orientés sont, par exemple :

- soit constitués de polyéthylène téréphtalate ;
- soit constitués de mélanges ou non de copolyesters polyéthylène téréphtalate contenant des unités cyclohexyl diméthylol à la place des unités éthylène ;
- soit composés de mélanges ou non de copolyesters polyéthylène téréphtalate avec une partie de polyester présentant des unités isophtalate ;
- soit constitués de plusieurs couches de polyesters de natures chimiques différentes, comme décrit précédemment, obtenus par coextrusion.

Des exemples spécifiques de polyesters aromatiques sont notamment le polyéthylène téréphtalate (PET), le polyéthylène isophtalate, le polybutylène téréphtalate, le poly-(diméthyl-1,4-cyclohexylènetéréphtalate) et le polyéthylène-2,6-naphtalènedicarboxylate. Le polyester aromatique peut être un copolymère de ces polymères ou un mélange de ces polymères avec une petite quantité d'autres résines, par exemple et sans être limitatif le polybutylène téréphtalate (PBT). Parmi ces polyesters, le polyéthylène téréphtalate (PET) et le polyéthylène-2,6-naphtalènedicarboxylate (PEN) sont particulièrement préférés car ils offrent un bon équilibre entre les propriétés physiques, les propriétés mécaniques et les propriétés optiques. De préférence, la teneur en acide téréphtalique, exprimées en moles pour cent moles d'acide est d'au moins 80. Dans les modes de réalisation préférés de l'invention, le support est un film de polyéthylène téréphtalate PET (par exemple à orientation bi-axiale) ou le polyéthylène naphtalate (PEN) ou le polybutylène téréphtalate (PBT).

Les films support mis en oeuvre dans la présente invention peuvent être orientés ou non. De préférence, ils sont orientés. Avantageusement, le film polyester mis en oeuvre est à orientation bi-axiale.

Le support selon l'invention peut être monocouche, bi-couches ou tri-couches. Chacune des couches est composée de polyesters tels que définis ci-dessus, de préférence du PET, PBT ou PEN, et/ou des copolyesters décrits

ci-dessus et/ou des mélanges de polyesters/copolyesters. La ou les couches peuvent être selon une structure M, MN, MNM ou MNO où M est différente de N et O, N est différente de O. La couche principale peut être encadrée par une ou deux couches identiques ou non en terme d'épaisseur et/ou de composition. Dans cette structure, le support peut être symétrique ou dysymétrique. Une de ces couches du support peut accroître l'adhérence du futur enduit décrit ci-dessous.

Le support mis en oeuvre pour la présente invention est de préférence un film en polyester, de préférence encore un film en polyéthylène téréphtalate (PET), d'épaisseur A telle que :

$A \leq 150$ µm (micromètres),
de préférence 4 µm $\leq A \leq$ 100 µm,
plus préférentiellement 4 µm $\leq A \leq$ 40 µm,
plus préférentiellement encore 4 µm $\leq A \leq$ 12 µm.

Le support selon l'invention peut comprendre avantageusement en partie du produit recyclé issu du support lui-même et/ou du support enduit et/ou du support enduit et revêtu. Le support peut contenir jusqu'à 80% en poids de ce produit recyclé par rapport au poids total de support final. Ceci permet de réduire les coûts de production du film et d'éviter de pertes économiques dues à la non-utilisation des chutes de support, de support enduit et/ou de support enduit et revêtu.

**L'enduit**

Le support de l'invention tel que défini ci-dessus est enduit d'une dispersion aqueuse comprenant :

- des particules de polymère(s) acrylique(s) et/ou méthacrylique(s) et présentant :

  soit

  - un taux de gel inférieur à 50% en poids par rapport au poids total de polymère(s) acrylique(s) et/ou méthacrylique(s), et
  - un taux de copolymère(s) d'acide(s) acrylique(s) et/ou méthacrylique(s) d'au moins 10% du poids total de polymères,

  soit :

  un taux de gel d'au moins 50% en poids par rapport au poids total de polymère(s) acrylique(s) et/ou méthacrylique(s),

  et

  - au moins un réticulant.

La présente invention concerne également cet enduit composé de ladite dispersion faite de polymères acryliques et/ou méthacryliques, ainsi que d'au moins un réticulant.

<u>- les polymères acryliques et/ou méthacryliques</u>

Dans la présente invention, la dispersion aqueuse comprend des particules de polymère(s) acrylique(s) et/ou méthacrylique(s). Ces particules polymères sont constituées par des monomères. Les particules polymères peuvent comprendre des monomètres hydrophobes, des monomères hydrophiles et des monomères partiellement hydrophiles.

De préférence, les monomères utilisés pour la synthèse des polymères acryliques et/ou méthacryliques utilisables pour le présent enduit sont les suivants :

(i) monomère(s) hydrophobe(s) qui est (sont) un mélange d'au moins un acrylate d'alkyle ou méthacrylate d'alkyl où la portion alkyl est linéaire ou branchée et contient au moins 4 atomes de carbone ;
(ii) au moins 5% de monomère(s) hydrophile(s)
(iii) au moins 5% de monomère(s) partiellement hydrophile(s) sélectionné(s) dans les acrylates d'alkyle ou méthacrylates d'alkyle où la portion alkyle a 1 ou 2 atomes de carbone.

Les pourcentages massiques de monomères (i), (ii) and (iii) sont basés sur la masse totale de monomères.

Les monomères hydrophiles qui peuvent être employés dans la présente invention sont des monomères copolymérisables avec les monomères hydrophobes et qui sont solubles dans l'eau. Les monomères hydrophiles sont sélectionnés parmi les acides mono-carboxyliques mono-oléfiniques, les acides di-carboxyliques mono-oléfiniques et leurs mélanges. Des exemples de monomères hydrophiles incluent, mais ne sont pas limités à, l'acide acrylique, l'acide méthacrylique, l'acide fumarique, l'acide maléique, l'acide itaconique, l'acide crotonique, un oligomère d'acide acrylique et leurs mélanges. Les acides préférés sont l'acide acrylique, l'acide méthacrylique et leurs mélanges.

La quantité de monomères hydrophiles basée sur la quantité totale de monomères (i), (ii) and (iii) est au moins de 5% en poids, de préférence supérieur à 10% en poids.

Les monomères partiellement hydrophiles qui peuvent être employés pour la présente invention incluent les acrylates d'alkyle ou les méthacrylates d'alkyle où la portion alkyle a 1 ou 2 atomes de carbone. Les exemples de monomères partiellement hydrophiles incluent, mais ne sont pas limités à, l'acrylate de méthyle, le méthacrylate méthyle, l'acrylate d'éthyle, le N-vinyl-2-pyrrolidone, et leurs mélanges. Les monomères partiellement hydrophiles préférés sont l'acrylate de méthyle, le méthacrylate de méthyle, l'acrylate d'éthyle, et leurs mélanges, le méthacrylate de méthyle et l'acrylate d'éthyle étant les plus préférés.

La quantité de monomères partiellement hydrophiles basée sur la quantité totale de monomères (i), (ii) and (iii) est au moins 30% en poids, préférentiellement de 40% à 60% en poids, plus préférentiellement de 50% à 60% en poids.

Avantageusement, les particules acryliques et/ou méthacryliques peuvent ne pas contenir de monomères de type acrylamide, de type acide ou ester di-carboxylique aromatique (notamment acide phtalique, isophtalique et téréphtalique et les esters correspondants), de type styrène, de type alkylphénol ou de type butadiène. Ces monomères sont de préférence bannis des applications alimentaires.

La masse totale de monomères hydrophobes, hydrophiles et partiellement hydrophiles décrits ci-dessus représente de façon préférée au moins 60%, de façon plus préférée au moins 75%, de façon plus préférée au moins 80%, et de façon encore plus préférée au moins 90% de la masse totale de monomères constituant les particules acryliques et/ou méthacryliques selon l'invention. Le pourcentage massique de monomères différents de ces monomères hydrophobes, hydrophiles et partiellement hydrophiles est de préférence inférieur à 20%, de façon plus préférée inférieur à 10%, et de façon encore plus préférée inférieur à 5%, par rapport à la masse totale des monomères. De préférence, les particules de polymère(s) acrylique(s) et/ou méthacrylique(s) selon l'invention sont essentiellement constituées par les monomères hydrophobes, hydrophiles et partiellement hydrophiles décrits ci-dessus. Selon un mode de réalisation préféré, les particules de polymère(s) acrylique(s) et/ou méthacrylique(s) selon l'invention sont constituées par les monomères hydrophobes, hydrophiles et partiellement hydrophiles décrits ci-dessus.

La mesure du taux de gel des particules de polymères acryliques et/ou méthacryliques est effectuée grâce à un extracteur Soxhlet avec la technique suivante :

> 1 g de polymère acrylique et/ou méthacrylique est placé dans une capsule de cellulose qui a été pesée préalablement. Un ballon est rempli de 100 ml de solvant tétrahydrofurane (THF) et laissé sous atmosphère d'azote. Le système est chauffé jusqu'à 95°C à l'aide d'un bain d'huile. A 95°C, le flux d'azote est diminué et des feuilles d'aluminium sont posées autour de la colonne en verre en vue de la garder chaude et d'éviter la condensation du THF sur les parois. L'extraction démarre lorsque le THF s'évapore et lorsqu'il tombe dans la capsule solubilisant le polymère acrylique et/ou méthacrylique qui n'est pas réticulé. L'extraction dure 7 heures. Ensuite la capsule est séchée à 105°C pendant une nuit.

La mesure du taux de gel (G) est calculée avec l'équation suivante :

$$G\ (\%) = [(Mf - Mc)\ X\ 100]\ /\ Mi$$

dans laquelle

> Mf est la masse finale, c'est-à-dire après séchage, de la capsule et du polymère non-soluble,
> Mc est la masse de la capsule, et
> Mi est la masse du polymère séché.

Le taux de copolymère(s) d'acide(s) acryliques et/ou méthacryliques en fonction du poids total de polymères est basé sur le rapport massique entre la quantité de monomère acide acrylique et/ou méthacrylique introduit et la quantité totale de monomère.

Par simplicité et par convention dans la suite du présent exposé, on désignera par « latex » indifféremment les

particules de polymère(s) acrylique(s) et/ou méthacrylique(s) et présentant soit un taux de gel inférieur à 50% en poids par rapport au poids total de polymère(s) acrylique(s) et/ou méthacrylique(s), et un taux de copolymère(s) d'acide(s) acryliques et/ou méthacryliques d'au moins 10% du poids total de polymères, soit un taux de gel d'au moins 50% en poids par rapport au poids total de polymère(s) acrylique(s) et/ou méthacrylique(s), ou une dispersion aqueuse de ces particules.

Dans une variante préférée de réalisation de l'invention, les particules de polymères acryliques et/ou méthacryliques sont telles que :

- leur taux de gel est inférieur à 40%, plus préférentiellement inférieur à 30%, plus préférentiellement encore inférieur à 20%, tout particulièrement préféré inférieur à 10% en poids par rapport au poids total de polymère(s) acrylique(s) et/ou méthacrylique(s), et
- le taux de copolymères d'acide(s) acryliques et/ou méthacryliques est supérieur à 5%, plus préférentiellement supérieur à 10% du poids total de polymères et encore plus préférentiellement supérieur à 15%.

Dans une variante de réalisation, les particules de polymères acryliques et/ou méthacryliques sont telles que leur taux de gel, après réticulation sur le support formé, est supérieur ou égale à 60%, plus préférentiellement supérieur ou égale à 70%, plus préférentiellement encore supérieur ou égale à 80%, tout particulièrement préféré supérieur ou égale à 90% en poids par rapport au poids total de polymère(s) acrylique(s) et/ou méthacrylique(s).

<u>- le réticulant</u>

Dans la présente invention, la dispersion aqueuse comprend en outre au moins un réticulant. Ce réticulant est apte à permettre une réticulation interfaciale les particules de polymères acryliques et/ou méthacryliques. Il conduit après réticulation à une couche d'enduit ayant un taux résiduel de fonctions acides libres du(des) copolymère(s) d'acide(s) acryliques et/ou méthacryliques en surface d'au moins 5% en poids par rapport au poids total de polymères(s). Le réticulant permet ainsi de réaliser une couche primaire permettant l'accrochage d'un revêtement.

Par réticulant, on entend un additif ajouté dans la dispersion aqueuse de polymère acrylique et/ou méthacrylique et qui génère pendant l'étape de séchage une réaction réticulation avec les fonctions hydroxy ou carboxylique du copolymère acrylique (voir Figure 4). Ce réticulant génère ainsi la formation d'un ou plusieurs réseaux tridimensionnels entre les chaines polymères.

Le taux résiduel de fonctions acides libres du(des) copolymère(s) d'acide(s) acryliques et/ou méthacryliques en surface est calculé avec la méthode de dosage conductimétrique suivante :

Les dosages conductimétriques ont pour principal objectif d'évaluer la quantité de charges présentes à la surface des particules, charges qui sont généralement apportées pour fonctionnaliser les latex. Deux types de charge sont à distinguer : les charges « acide fort » et les charges « acide faible ». Les charges « acide fort » sont les charges sulfate $SO_4$ provenant de l'amorceur de la polymérisation radicalaire, par exemple le persulfate d'ammonium. Les charges « acides faibles » sont les charges carboxyliques $COO^-$ amenées par l'acide acrylique et/ou méthacrylique. Le dosage conductimétrique s'effectue sur un latex préalablement lavé et dont le taux de solide est précisément connu. Le latex brut est dilué pour atteindre un taux de solide inférieur à 5%. Ce latex dilué est ensuite lavé sur des résines échangeuses d'ions mixtes, c'est-à-dire anionique et cationique. A l'issue de cette étape, les contre-ions des charges positives sont des ions hydroxyles et ceux des charges négatives des protons. Ce traitement permet d'éliminer les espèces ioniques non greffées à la surface des particules (charges provenant de l'amorceur ou molécules de tensioactif, libres ou faiblement adsorbées à la surface des particules). Le dosage consiste à déterminer les minimums de neutralisation des fonctions acides à l'aide d'une sonde conductimétrique et se déroule en deux étapes. La première étape consiste à doser les charges acide fort ($SO_4^-$) par ajout d'une solution de soude. Une fois la neutralisation de ces charges terminée, on additionne un excès de soude, afin de transformer les fonctions acide carboxylique présentes en surface en ions carboxylates. Les charges carboxyliques ne sont en effet pas directement détectables par la soude, du fait de leur faible $pK_A$. La deuxième étape consiste alors à doser le latex en retour par l'acide chlorhydrique : on neutralise tout d'abord les ions hydroxyles $OH^-$ en excès, puis les charges acide faible $COO^-$. Le latex dilué est mis en contact avec la résine et agité pendant 30 à 40 minutes. Il est ensuite filtré sur laine de quartz pour ôter la résine et sa conductivité est mesurée. L'opération est répétée autant de fois que nécessaire, jusqu'à ce que la conductivité soit constante. Les lavages successifs s'accompagnent en effet d'une diminution de la conductivité et le lavage est considéré comme terminé lorsque la conductivité se stabilise. Le taux de solide du latex lavé est ensuite précisément déterminé, car les lavages successifs ont tendance à diluer le latex. La granulométrie du latex lavé est par ailleurs vérifiée, afin de s'assurer qu'elle n'ait pas évolué au cours des lavages. Une certaine quantité de latex est pesée avec précision et diluée dans 50 mL d'eau déminéralisée. L'ensemble est agité et dégazé pendant 10 minutes par un flux d'azote, afin d'éliminer toute trace de dioxyde de

carbone dissous dans l'eau, qui pourrait fausser le dosage en provoquant la libération de fonctions carboxyliques. Un balayage d'azote est également maintenu au cours des dosages. Un pré-dosage permet d'évaluer la quantité de latex à utiliser, compte tenu de la concentration des solutions titrantes (i.e. ~$10^{-2}$ $mol.L^{-1}$), pour obtenir la plus grande précision. Trois dosages sont ensuite réalisés pour s'assurer de la fiabilité des résultats. Le suivi des dosages est effectué par un conductimètre équipé d'une électrode de platine et relié à une centrale d'acquisition. A partir des courbes de dosage, il est alors possible de calculer la concentration des charges dans le latex par les équations suivantes :

$$C_{charges\text{-}acide\text{-}fort} = \frac{[NaOH] \times V_{NaOH}}{m_{latex} \times TS} \times 10^3 \qquad C_{charges\text{-}acide\text{-}faible} = \frac{[HCl] \times V_{HCl}}{m_{latex} \times TS} \times 10^3$$

dans lesquelles

$C_{charges}$ désigne la concentration des charges dans le latex, exprimée en micro équivalent par gramme de polymère (μeq/gpolymère),
[NaOH] et [HCl] représentent respectivement la concentration en soude et en acide chlorhydrique des solutions titrantes, exprimées en $mol.L^{-1}$,
$V_{NaOH}$ et $V_{HCl}$ représentent respectivement le volume de solutions titrantes de soude et d'acide chlorhydrique utilisé pour le dosage, exprimées en litres,
$m_{latex}$ représente la masse de latex, exprimée en gramme, et
TS représente le taux de solide du latex dilué.

Dans les latex ayant un taux de gel inférieur à 50% en poids par rapport au poids total de polymère(s) acrylique(s) et/ou méthacrylique(s), mais ayant un taux de copolymères d'acides acryliques et/ou méthacryliques d'au moins 10% du poids total de polymères (ci-après dénommé parfois latex A), le réticulant va permettre une réticulation de deux types : intramoléculaire et interfaciale, cette dernière permettra de laisser suffisamment de polarité à la surface du film enduit formé pour permettre une bonne adhésion du revêtement qu'il est destiné à recevoir.

Les latex où le taux de gel est d'au moins 50% en poids par rapport au poids total de polymère(s) acrylique(s) et/ou méthacrylique(s) sont des latex déjà très réticulés (ci-après dénommé parfois latex B) et le réticulant qui est ajouté ne permet pas une réticulation intramoléculaire, il va permettre une réticulation interfaciale et surtout être utilisé comme un agent polarisant la surface du film formé par les particules acryliques et/ou méthacryliques.

Les proportions préférées de particules/réticulant sont 90/10 (poids/poids) plus préférentiellement 80/20.

Les réticulants suivants conviennent à la mise en oeuvre de la présente invention mais l'invention ne se limite pas à ceux-ci. Les réticulants peuvent être des résines à base d'amine, notamment des mélamines aldéhydes. Les résines à base d'amine sont des mélanges complexes avec différents sites fonctionnels et espèces moléculaires synthétisées par la condensation de formaldéhyde avec une amine et l'alkylation ultérieure des groupes méthylol résultants avec un alcool.

Certains réticulants utilisés sont des résines mélamine aldéhyde dont la formule générale suivante :

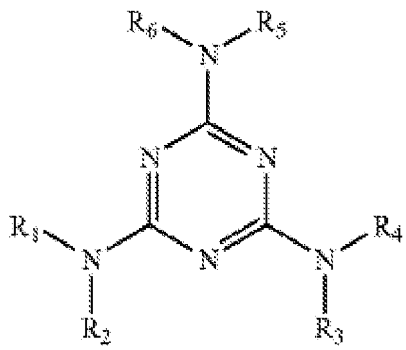

où
$R_1$ à $R_6$ est respectivement choisi parmi -H, $-CH_2OH$, $-CH_2OR_7$, $R_7$ étant un groupe alkyle en $C_1$ à $C_5$.

Les meilleures performances sont obtenues avec des réticulants ayant au moins l'une des propriétés suivantes :

- une résine à base d'amine partiellement méthylée ou mieux encore fortement méthylée,
- un durcissement rapide à une température suéprieure à 80°C,
- une bonne compatibilité avec les polymères acryliques solubles dans l'eau, tel que le latex ayant un taux de gel inférieur à 50% en poids par rapport au poids total de polymère(s) acrylique(s) et/ou méthacrylique(s), et un taux de copolymères d'acide(s) acryliques et/ou méthacryliques d'au moins 10% du poids total de polymères (par exemple le latex A),
- une stabilité au stockage à long terme lors qu'un mélange avec le polymère acrylique à base d'eau (supérieure à 48 h).

Les résines à base d'amine préférentiellement utilisées pour la mise en oeuvre de la présente invention sont tout particulièrement Cymel 1123® (une résine méthylée et éthylée de benzoguanamine-formaldéhyde, 98% minimum de solides) et Cymel 303LF® (une résine méthylée de mélamine-formaldéhyde ayant des groupes réactifs alcoxy, 98% minimum de solides), dont les structures chimiques respectives sont données ci-dessous :

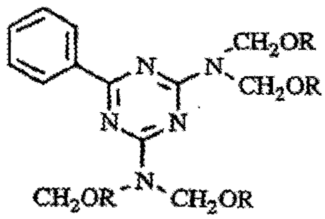

Cymel 1123

dans laquelle R peut être $CH_3$ ou $C_2H_5$

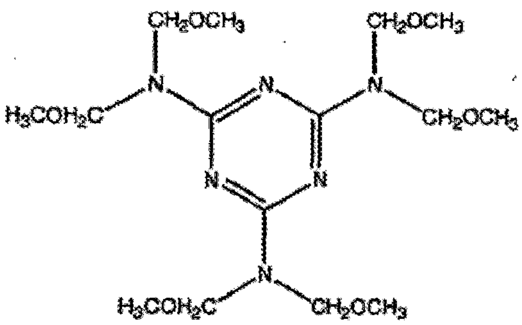

Cymel 303

Ces résines sont commercialisées par Cytec Industries Inc.

La résine aldéhyde mélamine et les groupes carboxyl, hydroxyl, amide et/ou méthylol disponibles des polymères acryliques et/ou méthacryliques peuvent réagir en présence d'un catalyseur acide. Le catalyseur acide peut être bloqué ou non. Comme catalyseur acide adapté pour la mise en oeuvre de la présente invention, on peut citer, sans se limiter à ceux-ci, les acides minéraux, l'acide p-toluène sulfonique, l'acide dinonylnaphtalène disulfonique, l'acide dodécylbenzènesulfonique, l'acide oxalique, l'acide maléique, l'acide hexamique, l'acide phosphorique, l'acide phtalique, l'acide acrylique copolymérisé dans le polymère. Le catalyseur le plus couramment utilisé est l'acide para-toluène sulfonique. La quantité optimale de catalyseur est fonction de l'acidité du latex acrylique et de la température de durcissement ciblées.

Ces réticulants montrent une bonne réactivité à partir d'une température supérieure à 140°C. Les réticulants de type mélamine-formol ont une température minimale d'activation au-delà de 100°C, ce qui est adapté pour le procédé selon l'invention et correspond aussi à la température de séchage de l'eau (évaporation) et donc à la formation de l'enduit réticulé.

Dans une variante de réalisation, il peut être prévu d'ajouter à l'enduit des charges minérales ou des particules organiques ou inorganiques en dispersion dans l'eau qui auront pour but de contrôler le glissant du support après enduction. Il est possible que l'enduit selon l'invention contienne par ailleurs des additifs fonctionnel. Toutefois, de préférence, l'enduit selon l'invention ne contient pas de promoteur d'adhérence, par exemple des citrates, des adipates ou des huiles végétales époxydées.

L'enduit aussi appelé couche primaire d'accrochage a une épaisseur E telle que :

E ≤ 200 nm (nanomètres),
de préférence 40 nm ≤ E ≤ 120 nm,
plus préférentiellement 50 nm ≤ E ≤ 100 nm,
plus préférentiellement encore 60 nm ≤ E ≤ 90 nm.

L'épaisseur de la couche de primaire peut être contrôlée par tout moyen approprié comme décrit ci-dessous.

Les latex utilisés dans la mise en oeuvre de la présente invention présentent de préférence une taille de particules basse (dp < 100 nm) et par conséquent la surface particulaire est très haute. Le réticulant, qui est une source de polarité nécessaire à l'interaction avec le futur revêtement, se trouve à la surface des particules qui représentent donc une très grande surface par $m^2$ de support. Ceci contribue à accroître le nombre de sites d'interaction possibles avec les molécules du revêtement (par exemple du métal ou un oxyde de métal) et donc à favorise l'adhésion du revêtement à l'interface de l'enduit.

L'épaisseur optimale d'enduit est d'environ 80 nm ±20 nm ce qui correspond à 0,08 g/$m^2$ de support.

La surface totale S représentée par la quantité d'enduit peut être calculée comme suit :

$$S = N_p \times S_{1p}$$

$$Np = \frac{V_{polymer}}{\mathrm{V_{1p}}} = \frac{m_p}{\mathrm{V}_{1p}} \times d$$

dans lesquelles :

$N_p$ = nombre de particules de polymère
$S_{1p}$ = surface d'une particule en $m^2$
$V_{polymer}$ = volume de particules de polymère en $m^3$
$\mathrm{V_{1p}}$ = volume d'une particule en $m^3$
$m_p$ = masse d'une particule de polymère en g
$d$ = densité de polymère (≈1 g/$cm^3$ pour le copolymère acrylique)
$d_p$ = diamètre de la particule de polymère en m.

Pour une épaisseur donnée d'enduit (80 nm) et un diamètre donné de particule de polymère ($d_p$ = 80 nm), la surface totale des particules de polymère S pour un mètre carré de support PET enduit est

$$S = 1500 \text{ m}^2$$

en considérant que les particules de polymère sont sphériques (i.e. que $\mathrm{V_{1p}} = \frac{4}{3} \times \pi \times r_p^3$ et et que $S_{1p} = \pi \times r_p^2$).

**Le support enduit**

Par simplicité, le support enduit correspond au support tel que décrit ci-dessus, de préférence un film polyester, sur lequel a été appliqué et réticulé l'enduit constitué de la dispersion aqueuse telle que définie ci-dessus à laquelle un réticulant est ajouté.

Les performances optimales sont obtenues avec une formulation de latex acryliques présentant au moins l'une des caractéristiques suivantes, de préférence une combinaison d'au moins deux de ces caractéristiques :

- une dispersion aqueuse comprenant des particules de polymère(s) acrylique(s) et/ou méthacrylique(s) et présentant un taux de gel d'au moins 50% en poids par rapport au poids total de polymère(s) acrylique(s) et/ou méthacrylique(s),
- une température minimale de formation de film entre 10°C et 50°C (ou un film se formant à température ambiante),
- taille de particules inférieure à 100 nm,
- une réticulation interfaciale avec un réticulant présentant des fonctionnalités amine telle que la mélamine.

Le support (film polyester) enduit dudit enduit est destiné à recevoir un revêtement donné en fonction des applications souhaitées.

**Le revêtement**

Diverses applications sont envisagées pour le support final, à savoir le support enduit de la dispersion telle que décrite ci-dessus et réticulé grâce au réticulant décrit ci-dessus, et revêtu. Les applications envisagées dépendent du revêtement lui-même.

Le revêtement est apte à réagir avec la couche primaire d'accrochage selon l'invention. Cette réaction s'effectue via les fonctions acides libres du copolymère ou polarité restant en surface du support enduit. La présence de cette polarité (groupements COOH, voire OH) permet une interaction possible entre l'enduit et le revêtement et induit une meilleure fixation de ce dernier au support.

Le revêtement comprend :

- au moins une couche d'au moins un métal et/ou au moins un oxyde métallique, ou
- au moins une couche d'encre, ou
- au moins une couche d'adhésif.

Dans des cas bien spécifiques, il peut être envisagé de combiner ces différents types de revêtements.

Par support enduit revêtu, on comprend le support tel que décrit ci-dessus avec ou sans traitement physique de type corona ou plasma, auquel on a appliqué fait réticulé un enduit tel que défini ci-dessus et auquel on a appliqué un revêtement tel que défini ci-dessus.

Lorsque le revêtement consiste en une couche d'au moins un métal et/ou au moins un oxyde métallique, le métal utilisé pour le revêtement peut être choisi parmi l'aluminium, le cuivre, le nickel, l'argent, l'or, et leurs alliages et le(s) oxyde(s) métallique(s) est(sont) choisi(s) parmi les oxydes de l'aluminium, de silicium, de cuivre, de nickel, d'argent et leurs mélanges. Il peut être également envisagé de revêtir le support enduit avec du sulfure de zinc.

L'encre utilisée pour le revêtement est classique et connue de l'homme de l'art. Elle peut être choisie parmi différents type d'encres, aux particularités propres selon leur mode de séchage (absorption, polymérisation oxydative, évaporation du solvant, polymérisation sous rayonnement UV). Les procédés d'impression couramment utilisés pour les films plastiques sont l'héliogravure, la flexographie et l'offset. Le composant copolyester de l'enduit, ayant plus d'affinité pour le PET, favorisera l'adhésion primaire/film, tandis que la composante copolymère acrylate, ayant plus d'affinité pour les encres (souvent base acrylate), favorisera l'adhésion primaire/encre.

L'adhésif utilisé pour le revêtement est classique et connu de l'homme de l'art. On utilise particulièrement les produits commerciaux dont les applications sont identiques à celles visées dans la présente demande.

Le support enduit et revêtu selon l'invention offre une très forte adhésion du revêtement et de très bonnes propriétés barrières, en particulier à l'oxygène et à la vapeur d'eau, dans des conditions de haute température et d'humidité. Les conditions du remplissage à chaud ou d'emballage, par exemple de produits alimentaires comme la sauce tomate (cf. les exemples ci-dessous) sont des conditions sous haute température et en conditions humides.

**Le procédé d'enduction et de fabrication du support enduit**

En vue d'obtenir une adhérence accrue du revêtement ultérieur du support en condition humide et sèche, un traitement chimique (après ou pas un traitement physique de type corona ou plasma) a été appliqué au support avant la phase de revêtement. Ce traitement chimique est une enduction d'au moins une couche de primaire d'accrochage ou primaire d'adhérence.

Le support est enduit avec au moins une couche de primaire d'accrochage selon le procédé comprenant les étapes suivantes :

a) on met en oeuvre un support,
b) éventuellement, on effectue un traitement physique de surface type corona ou plasma,
c) on enduit, sur au moins une face dudit support, une dispersion aqueuse comprenant :

- des particules de polymère(s) acrylique(s) et/ou méthacrylique(s) et présentant :

    soit, d'une part, un taux de gel inférieur à 50 % en poids par rapport au poids total de polymère(s) acrylique(s) et/ou méthacrylique(s) et, d'autre part, un taux de copolymère(s) d'acide(s) acrylique(s) et/ou méthacrylique(s) d'au moins 10% du poids total de polymères,

    soit un taux de gel d'au moins 50% en poids par rapport au poids total de polymère(s) acrylique(s) et/ou méthacrylique(s), et

- au moins un réticulant, de préférence en solution aqueuse,

et on fait réticuler l'enduit pour réaliser une couche primaire permettant l'accrochage d'un revêtement, le taux résiduel de fonctions acides libres du(des) polymère(s) en surface étant d'au moins 5% en poids par rapport au poids total de polymère(s).

Le support mis en oeuvre est tel que défini ci-dessus. De préférence, il s'agit d'un film en PET.

Pour améliorer encore les propriétés d'adhésion du revêtement sur le support enduit, il est envisageable qu'au moins une partie de la surface du film selon l'invention soit soumise à un traitement par une décharge électrique de type corona et/ou à un traitement de type plasma. Ce traitement est réalisé avant l'enduction (étape c).

Ledit traitement de type corona est une décharge corona sous air ambiant à la pression atmosphérique ou sous gaz à des pressions partielles élevées, préférablement entre 100 mbar et 3000 mbar, encore plus préférablement à la pression atmosphérique.

Le dépôt de cette couche primaire d'accrochage sur le film polyester, de préférence PET, peut être réalisé par les différentes techniques connues de l'homme de l'art. Ainsi, la dispersion de polymère(s) acrylique(s) et/ou méthacrylique(s) avec réticulant peut être déposée par gravité à partir d'une couleuse à fente, ou par passage du film dans la dispersion, au moyen de rouleaux de transfert, par enduction en ligne avec un procédé de gravure inversée.

De manière préférentielle, l'enduction du support, selon la présente invention, est effectuée en ligne ce qui permet non seulement une simplification de la mise en oeuvre industrielle mais également un gain de temps et d'argent considérable.

L'épaisseur de l'enduit est fonction de la cinétique de réticulation de ce dernier. Elle dépend notamment de l'extrait sec de la dispersion employée, du pourcentage de réticulant inclus dans la dispersion et des conditions de séchage de l'enduit. Bien évidemment, l'épaisseur est aussi fonction de la quantité d'enduit déposée.

L'enduction du support se fait sur au moins une face du support. Elle peut bien évidement se faire sur les deux faces du support.

Le support est de préférence étirable. De préférence, il subit un étirage dans une ou deux directions perpendiculaires. Lorsqu'il est étiré dans les deux directions, on parle d'un étirage bi-dimensionnel qui peut être d'abord longitudinal (Etirage Longitudinal EL, taux EL $\geq$ 3,0) suivi par un étirage transversal (Etirage Transversal ET, taux ET $\geq$ 3,5). Le taux d'étirage planaire (défini comme le produit du taux d'étirage longitudinal et du taux d'étirage transversal, quel que soit l'ordre de ces étirages) est par exemple compris entre 1 et 20, habituellement supérieur à 12.

Les séquences d'étirage peuvent être différentes en fonction des machines utilisées sans influence sur les propriétés obtenues grâce à l'invention. Par exemple, on peut utilement utiliser des machines dites à séquence inverse ou des machines multi-étapes (« multistep »), des machines à séquences alternées ou des machines d'étirages simultanés, etc.

La température d'étirage est par exemple comprise entre la température de transition vitreuse Tg et une température au maximum égale à Tg + 60°C en direction longitudinale de même qu'en direction transversale.

L'étirage longitudinal est effectué par exemple de 3 à 6 fois et l'étirage transversal par exemple de 3 à 5 fois.

En général, à la suite du ou des étirages, le film subit une étape de thermofixation. A titre d'exemple, pour le PET, la thermofixation est effectuée entre 180°C et 250°C (par exemple à 240°C) pendant 1 à 60 secondes par exemple et ensuite à une température inférieure afin de stabiliser le film.

Le dépôt par enduction de la couche primaire peut avoir lieu avant tout étirage du support, entre les deux étapes d'étirages du support ou après les deux étapes d'étirage, cette dernière option étant moins satisfaisante. De préférence, on enduit la primaire d'accrochage entre les deux étapes d'étirage.

Après dépôt de l'enduit, la réticulation a lieu pour former une couche primaire d'accrochage. La réticulation peut avoir lieu naturellement après le dépôt de l'enduit ou peut être provoquée par le séchage de l'enduit, destiné à éliminer l'eau de la dispersion aqueuse. Cependant, dans le cas d'une enduction en ligne, il n'est généralement pas nécessaire de procéder à une étape spécifique de séchage : le séchage est réalisé au cours des étapes d'étirages et/ou de thermofixation. Toutefois, il est également envisageable dans la présente invention de mettre en oeuvre une étape de séchage par traitement thermique préalablement à l'étirage et/ou à la thermofixation.

La présence du réticulant vise à apporter une polarité à la surface du film. Une telle polarité (groupes COOH, OH) permet des interactions favorables entre le revêtement et la surface du film. Cependant, ces polarités génèrent aussi une sensibilité à l'eau car les enduits de support riches en fonctions acides ont tendance à absorber facilement l'eau de telle sorte qu'en conditions humides, les liaisons créées entre le revêtement et le support sont perdues. L'alternative était donc d'activer la réaction de réticulation lors de la formation du film ou lors de son séchage. L'étape c) vise donc également à accroître la réticulation du film lors de la formation de ce dernier ou lors de son séchage.

Le film obtenu à l'issu du procédé d'enduction a une sensibilité réduite à l'eau.

Dans une variante de réalisation de la présente invention, le latex acrylique (particules de polymères acryliques et/ou méthacryliques) est fait d'un copolymère contenant de 1% à 60% en poids total de monomères acryliques et/ou méthacryliques et de 1% à 15% de copolymères d'acides acryliques et/ou méthacryliques.

Le procédé d'enduction est tel que la couche primaire d'accrochage enduite sur le support a une épaisseur E

telle que définie ci-dessus.

La mesure de l'épaisseur de la couche primaire d'adhérence ou du support enduit de la couche primaire d'adhérence est effectuée par la méthode TOF-SIMS (Time of Flight-Secondary Ion Mass Spectrometry) où 2 types de mesures ont été réalisés.

1. Un profil de répartition qualitatif en profondeur de la surface du film et jusqu'à coeur du substrat PET sur des films PET dans différentes conditions. Cela permet une estimation de l'épaisseur de la couche primaire d'accrochage en temps d'érosion et de faire une analyse comparative entre différents films de même nature.
2. Une mesure de l'épaisseur du film par relevé profilométrique d'un cratère obtenu sur un film de référence (avec arrêt de l'érosion ionique après élimination du revêtement), et le calcul de la vitesse d'érosion à partir du temps d'érosion correspondant pour l'éliminer.

A partir de la mesure N°2 une corrélation entre le temps d'érosion/vitesse d'érosion et l'épaisseur peut être établie. Ainsi l'épaisseur peut être estimée sur l'ensemble des films où un temps d'érosion a été mesuré (mesure N°1).

La surface analysée est de 100 $\mu$m X 100 $\mu$m au centre du cratère d'érosion de taille supérieur (600 $\mu$m X 600 $\mu$m environ), ceci pour minimiser les effets de bords et de re-déposition. Chaque point des profils est obtenu à partir d'un spectre de masse, ce qui permet une analyse élémentaire tout au long de la profondeur sondée. Ainsi, chaque élément ou contaminant présent à la surface, à coeur des couches et aux interfaces est automatiquement détecté.

Sont indifféremment détectés dans le film (la couche primaire d'accrochage) et dans le PET les éléments majeurs suivants : le carbone (C) et l'oxygène (O). Dans la couche primaire d'accrochage des traces de soufre (S) sont détectées. Les espèces ioniques retenues pour les profils de répartitions en profondeur sont donc les éléments suivants : C, O, et S.

**Le procédé de revêtement**

Le support enduit d'au moins une couche de primaire d'accrochage tel qu'obtenu par le procédé défini ci-dessus est réalisé par un procédé comprenant une étape d'application d'un revêtement apte à réagir avec la couche primaire d'accrochage. Le revêtement en question peut être :

- au moins une couche d'au moins un métal et/ou au moins un oxyde métallique, ou
- au moins une couche d'encre, ou
- au moins une couche d'adhésif.

La présence d'acides forts à l'interface fournis par le comonomère tel que l'acide acrylique et/ou méthacrylique de la primaire d'accrochage permet une interaction favorable de l'enduit de copolymère acrylique avec les particules du revêtement futur, par exemple les particules de métal pendant la phase de métallisation du film enduit. Plus la polarité à la surface du film est forte, plus l'adhésion du revêtement est forte quel que soit le type de revêtement.

Le revêtement peut se faire sur l'enduit qui est présent sur une ou deux faces du support.

Lorsqu'il s'agit d'une métallisation du support enduit, elle est réalisée sous vide. Elle consiste à vaporiser sous vide ($4x10^{-4}$ mbar) une fine couche métallique (typiquement aluminium) sur le film. L'évaporation est réalisée dans des creusets en céramiques chauffés par effet Joule (1400°C à 1500°C). Le métal est alors projeté sur la surface du film qui est en contact avec un rouleau refroidi appelé rouleau de couchage. Il condense alors immédiatement, formant ainsi une couche mince de 20 nm à 100 nm. Au cours de la métallisation, l'épaisseur de la couche de métal est contrôlée par des mesures de Densité Optique (DO, mesure de la transparence du film).

La métallisation se fait soit avec au moins un métal choisi parmi l'aluminium, le cuivre, le nickel, l'argent, l'or, et leurs alliages, soit au moins un oxyde métallique choisi parmi les oxydes de l'aluminium, de silicium, de cuivre, de nickel et d'argent, soit avec un de leurs mélanges.

Lorsqu'il s'agit de l'application d'un revêtement encre et adhésif est effectuée selon les méthodes connues de l'homme de l'art, en particulier l'impression/complexage.

Il a été découvert de façon surprenante que la réaction de réticulation qui se fait principalement à l'interface permettait d'obtenir une adhésion du revêtement nettement accrue et particulièrement en conditions humides. La réticulation interfaciale est généralement utilisée pour générer des réseaux de polymères hétérogènes : domaine de polymères durs et mous (coeur-coquille) pour obtenir un bon équilibre entre les propriétés cohésives et adhésives. Le challenge dans la présente invention était de produire un polymère cohésif (ayant une forte densité de réticulation) mais présentant également des fonctionnalités polaires permettant une bonne interaction avec le revêtement en particulier avec le métal et/ou l'oxyde de métal et par conséquent une forte adhésion à l'interface revêtement (métal de préférence)/film enduit (PET de préférence).

**Les propriétés du support enduit et revêtu**

- <u>Adhésion</u>

Le support enduit et revêtu obtenu par le procédé décrit ci-dessus permet une adhésion du revêtement d'au moins 200 gF/38mm mesurée selon le test d'adhésion TA détaillé ci-dessous.
En condition sèche, l'adhésion du revêtement est bonne et est d'au moins 1000 gF/38mm. En revanche, en conditions humides, les propriétés d'adhésion du revêtement sont souvent mises à mal mais les propriétés du support enduit et revêtu selon la présente invention en conditions sont d'au moins 200 gF/38mm mesurées selon le test d'adhésion TA (voir Figures 2, 3 et 5).
Le test d'adhésion TA est mesuré selon les recommandations AIMCAL TP-105-92 (Metallizing Technical Reference éditée par Association of Industrial Metallizers, Coaters and Laminators). Il est décrit pour le métal mais il convient pour les autres types de revêtement destinés à être appliqués sur le support enduit selon l'invention:

> Le test TA permet de mesurer la force d'adhésion entre le métal et le PET à l'aide d'un dynamomètre. Ce test est réalisé dans des conditions sèches et humides. Le film PET métallisé est scellé avec un film polyéthylène traité (DAP). Une éprouvette de 38 mm de large est ensuite découpée dans l'échantillon et va servir à la mesure. Le complexe formé est représenté à la figure 7. L'éprouvette est testée en traction à l'aide d'un dynamomètre INSTRON en vue de déterminer la force à appliquer pour arracher la couche d'aluminium du film enduit. Le film PET est fixé au mors du bas et le film DAP à celui du haut (figure 8). De cette façon une traction s'exerce à 180° à une vitesse de 100 mm/min sur la zone scellée et la force nécessaire au délaminage est mesurée (norme suivie NF T 54-122, « Evaluation de la qualité d'une soudure ou d'un collage de deux éléments de feuilles par un essai de traction »). Le résultat de ce test TA est une force d'adhésion exprimée en gF/38mm. Pour chaque échantillon, un minimum de 3 éprouvettes est testé ainsi, et chaque film est découpé en six bandes larges dont on mesure la densité optique afin de connaître la quantité de métal déposée. On mesure la force qu'il faut au dynamomètre pour arracher la couche de métal au film de PET en conditions sèche et humide. La difficulté réside dans le maintien des forces d'adhésion PET/Métal en condition humide. Pour la mesure en milieu humide, l'opérateur applique une faible quantité d'eau pour simuler un environnement chargé en humidité.

- <u>Barrières</u>

L'un des objectifs de la présente invention est d'obtenir un support enduit et revêtu ayant des propriétés barrières accrues, en particulier des propriétés barrières à l'oxygène (O2TR pour taux de transmission d'oxygène, et MVTR pour taux de transmission de vapeur d'eau).
Les mesures de perméabilité à l'oxygène sont réalisées selon la norme ASTM F-1927 "Standard Test Method for détermination of Oxygen Gas Transmission Rate, Permeance at Controlled Relative Humidity through Barrier Materials using a Coulometric Detector", les résultats sont exprimés en cc/$m^2$/j (centimètre cube par mètre carré et par jour).
Les mesures de perméabilité à la vapeur d'eau sont réalisées selon la norme ASTM F-1249 « Standard Test Method for Water Vapor Transmission Rate through Plastic Film and Sheeting using a Modulated Infrared Sensor", les résultats sont exprimés en mg/$m^2$/j (milligramme par mètre carré et par jour).
Le support enduit et revêtu obtenu par le procédé tel que défini ci-dessus présente au moins l'une des propriétés suivantes :

- un taux de transmission d'oxygène à 23°C et 50% de taux d'humidité au moins inférieur à 2 cc/$m^2$/j, de préférence inférieur à 1 cc/$m^2$/j, plus préférentiellement inférieur à 0,5 cc/$m^2$/j , et/ou
- un taux de transmission de vapeur d'eau à 38°C et 90% de taux d'humidité au moins inférieur à 2 mg/$m^2$/j, de préférence inférieur à 1 mg/$m^2$/j, plus préférentiellement inférieur à 0,5 mg/$m^2$/j.

Les propriétés d'adhésion du revêtement et de barrières sont influencées par l'épaisseur du de l'enduit. Plus l'épaisseur de l'enduit est faible, plus l'adhésion du revêtement est bonne en conditions sèche et humide et meilleures sont les propriétés barrières. Cependant, l'épaisseur ne doit pas aller en-deçà d'une valeur minime (par exemple 20 nm) pour permettre une répartition homogène de l'enduit sur le support et/ou une enduction complète du support.
Un réseau de polymères plus interpénétré se forme rendant plus difficile la pénétration de l'oxygène et de la vapeur d'eau au travers de l'enduit (cf. figure 5 et tableau 2).
Les propriétés barrières sont particulièrement observées pour des films métallisés. Ceci est moins remarquable avec les films imprimables ou adhésifs.
L'épaisseur de l'enduit peut varier avec :

- le contenu solide de la formulation à enduire (cf. exemples et figure 5, 10 à 20% en poids/poids total), et/ou
- la taille des rouleaux utilisés pour l'application de la dispersion aqueuse sur le film (cf. Figure 6)

**Applications**

Les applications des supports enduits et revêtus selon la présente invention sont notamment l'emballage alimentaire, l'emballage médical et les applications « dites » industrielles (e.g. isolation électrique, composants électroniques et films de protection, films optiques, films filtrant une partie du spectre lumineux, films pour l'agriculture ou le bâtiment), les films imprimables ou bien encore la décoration ou la protection de supports.
Concernant l'emballage, il peut s'agir de l'emballage de produits alimentaires depuis leur site fabrication/production jusqu'à leur arrivée chez le consommateur final. Ces films sont développés tout spécialement pour assurer une barrière soit aux gaz (oxygène, azote, hélium, vapeur d'eau, etc.) soit aux arômes. Il peut s'agir également d'un film d'emballage pour la cuisson des aliments au four micro-ondes.
Il peut s'agir aussi de l'emballage de protection de produits industriels divers tels que des appareils électroménagers, des pièces électroniques, etc.
S'agissant de la décoration, ces films sont utilisés pour créer des surfaces de type faux bois par exemple.
Concernant les films ou feuilles pour l'art graphique, il peut s'agir des supports imprimables recouverts d'encres ou non.

**Figures et tableaux**

La figure 1 représente un support (film PET) enduit et revêtu selon la présente invention.
La figure 2 représente un diagramme de l'adhésion du revêtement métal en conditions sèche ou humide au latex A avec ou sans ajout de réticulant et à différents ratio (latex/réticulant).
La figure 3 représente un diagramme de l'adhésion du revêtement métal en conditions sèche ou humide au latex B avec ou sans ajout de réticulant et à différents ratio (latex/réticulant).
La figure 4 représente un schéma de la réticulation interfaciale de groupes carboxyliques localisés à l'interface de particules de polymère avec un réticulant de type mélamine-formol.
La figure 5 représente un diagramme associé à un tableau illustrant les propriétés d'adhésion en conditions sèche et humide, et les propriétés barrières (O2TR et MVTR) ainsi que la densité optique d'un film enduit et réticulé avec un latex B avec ou sans réticulant à différentes épaisseurs d'enduit.
La figure 6 représente le procédé de production d'un film enduit selon la présente invention, et en particulier le procédé d'enduction en ligne (a) et l'enduction en ligne par gravure inversée (b).
La figure 7 représente un schéma du complexe PET/DAP dans le test d'adhésion TA. La figure 8 représente un schéma de l'éprouvette fixée sur une plaque entre les mâchoires du dynamomètre, utilisée dans le test d'adhésion TA.

Le tableau 1 représente différentes compositions d'enduit selon l'invention appliquées sur un support selon l'invention et leurs valeurs de taux de gel (en pourcentage en poids/ poids total de polymères) après séchage de l'enduit à 110°C.
Le tableau 2 représente les valeurs de propriétés barrières d'un enduit contenant ou non un réticulant et suivant différentes épaisseurs d'enduit.

**Exemples**

**Exemple 1 - Propriétés des dispersions selon l'invention**

Les dispersions selon l'invention (latex A préparé selon l'exemple 1 de la demande EP 0260203 B1 et latex B commercialisé sous le nom BT-67 par la société DSM, auxquels on ajoute le réticulant X ou Y en proportion de 90/10 ou 80/20 correspondant au ratio Latex/Réticulant en poids sec/sec) sont étudiées sur leur capacité à réticuler en fonction de la température (MFFT en °C qui est la température minimale pour former un film), et en fonction de la température vitreuse du copolymère (Tg en °C).
Le Latex A sans réticulant correspond à une dispersion aqueuse comprenant des particules de polymère(s) acrylique(s) et/ou méthacrylique(s) et présentant soit, d'une part, un taux de gel inférieur à 50 % en poids par rapport au poids total de polymère(s) acrylique(s) et/ou méthacrylique(s) et, d'autre part, un taux de copolymère(s) d'acide(s) acryliques et/ou méthacrylique d'au moins 10% du poids total de polymères.
Le latex B sans réticulant correspond à une dispersion aqueuse comprenant des particules de polymères acrylique(s) et/ou méthacrylique présentant un taux de gel d'au moins 50% en poids par rapport au poids total de

polymère(s) acrylique(s) et/ou méthacrylique(s).

Le réticulant utilisé est Cymel 303 LF (ci-après dénommé C303 LF ou X) ou Cymel 1123 (ci-après dénommé C1123 ou Y) de chez Cytec Industries Inc.

En deçà de la température vitreuse, les molécules présentent une faible mobilité relative. La température de transition vitreuse Tg d'un polymère est un indicateur utile pour la flexibilité. Si la Tg est trop élevée (>80 ou 90°C) on peut s'attendre à rencontrer des problèmes de microfissures dans le primaire d'accroche et ainsi générer des défauts d'enduction qui générèrent eux-mêmes des défauts de métallisation ou d'impression.

Si la taille des particules en nanomètres est faible, cela permet de limiter la sensibilité à l'eau du primaire d'accroche. En effet, plus les tailles sont faibles à extrait sec constant, plus le nombre de particules est important. Cela contribue à diminuer l'espace entre les particules et ainsi diminuer la fraction de vide où l'eau peut être piégée ou absorbée lorsque le film PET enduit est mis en contact avec de l'eau.

Le taux de gel est mesuré après séchage de l'enduit à 110°C en % en poids par rapport au poids total de polymères.

Tableau 1

| Latex | MFFT, °C | Tg, °C | dp, nm | Taux de gel après séchage de l'enduit |
|---|---|---|---|---|
| Latex A[1] | 40 | 64 | 50-80 | 9 |
| Latex A+Réticulant X (90/10)[2] | | ∞ | 50-80 | 80 |
| Latex A+Réticulant Y (90/10) | | ∞ | 50-80 | 60 |
| Latex A+Réticulant X (80/20) | | ∞ | 50-80 | 90 |
| Latex A+Réticulant Y (80/20) | | ∞ | 50-80 | 70 |
| Latex B[3] | 17 | 20 | <100 | 90 |
| Latex B + Réticulant X (90/10) | | ∞ | <100 | 95 |
| Latex B + Réticulant Y (90/10) | | ∞ | <100 | 90 |
| Latex B + Réticulant X (80/20) | | ∞ | <100 | 95 |
| Latex B + Réticulant Y (80/20) | | ∞ | <100 | 90 |

[1] Latex non réticulé et comprenant un monomère di-acrylique (Ethylene Glycol dimethacrylate) dans la dispersion contribuant à faire des branchements dans le latex résultant.
[2] Ratio Latex/Réticulant en poids sec/sec.
[3] Latex commercial décrit comme un latex acrylique déjà réticulé.

Le réticulant X permet d'obtenir des résultats un peu meilleurs sur l'obtention de gel après séchage que le réticulant Y qui lui développe de meilleures propriétés des résistances chimiques ou à l'eau et une meilleure flexibilité.

**Exemple 2 - Préparation d'un film PET enduit d'une couche de primaire d'accrochage (latex A+réticulant)**

On met en oeuvre la dispersion primaire d'accrochage selon l'exemple 1 : latex A (15 ou 20% d'extrait sec) + réticulant X ou Y (avec un rapport latex/réticulant de 80/20 extrait sec/extrait sec). Cette dispersion est enduite sur le support par un procédé d'enduction en ligne par un procédé d'enduction en ligne héliographique selon la figure 6b (machine pilote Toray Film Europe). Le rouleau hélio en rotation entraîne l'enduit en dispersion sur le film PET. Les rouleaux hélio petite ou grande gravure peuvent être utilisés pour l'enduction en ligne. L'enduit est séché à l'aide d'un rayonnement infra-rouge à une longueur d'onde de l'ordre de 2 μm. Les résultats des propriétés de ce film enduit sont donnés dans le tableau 2.

**Exemple 3 - Préparation d'un film PET enduit d'une couche de primaire d'accrochage (latex B+réticulant)**

L'exemple 2 est mis en oeuvre avec une dispersion différente, à savoir latex B (10-15 ou 20% d'extrait sec) + réticulant X ou Y (avec un rapport latex/réticulant de 80/20 extrait sec/extrait sec). Les résultats des propriétés de ce film enduit sont donnés dans le tableau 2.

**Exemple 4 - Préparation d'un film PET enduit d'une couche de primaire d'accrochage et revêtu d'une couche de métal**

Le film PET enduit d'une couche de primaire d'accrochage selon l'exemple 2 ou 3 est revêtu d'une couche d'aluminium obtenue par évaporation sous vide (4x10-4 mbar) lors d'un procède de métallisation industriel classique (machine TopMet de chez Applied Materials). Au cours de la métallisation, l'épaisseur de la couche de métal est contrôlée par une mesure de transparence du film traduite en termes de Densité Optique DO. La DO choisie pour le présent exemple est comprise entre 2,4-3,0 ce qui correspond à une épaisseur de la couche métal de 30 à 60 nm.
Par une méthode similaire et à l'aide du même équipement, on peut préparer un film PET enduit d'une couche de primaire d'accrochage et d'une couche d'oxyde d'aluminium d'épaisseur d'environ 10 nm.

**Exemple 5 - Propriétés d'adhésion d'un film PET enduit d'une couche de primaire d'accrochage et revêtu d'une couche de métal selon l'invention**

Les résultats sont donnés sur la figure 2.
C303LF et C1123 sont les réticulants utilisés de chez Cytec Industries Inc.
Les données entre parenthèses correspondent au ratio latex A/réticulant en pourcentage en poids sec/sec.
On observe que le latex A sans réticulant ne permet pas une adhésion du revêtement métal suffisante en conditions humides. En revanche, le latex A associé au réticulant X (C303 LF) et Y (C1123) dans les proportions indiquées (90/10 et 80/20) appliqués sur un film PET donnent des résultats très satisfaisants avec une adhésion du métal d'au moins 200gF/38mm. L'enduction du film PET avec un latex A associé à un réticulant X (80/20) donne les meilleurs résultats d'adhésion du métal aluminium déposé par évaporation sous vide selon les conditions de procédé standard.

**Exemple 6 - Propriétés d'adhésion d'un film PET enduit d'une couche de primaire d'accrochage et revêtu d'une couche de métal selon l'invention**

Les résultats sont donnés sur la figure 3.
C303LF et C1123 sont les réticulants utilisés de chez Cytec Industries Inc.
Les données entre parenthèses correspondent au ratio latex A/réticulant en pourcentage en poids sec/sec.
On observe que le latex B sans réticulant ne permet pas une adhésion du revêtement métal suffisante. En revanche, le latex B associé au réticulant X (C303 LF) et Y (C1123) dans les proportions indiquées (90/10 et 80/20) appliqués sur un film PET donnent des résultats très satisfaisants avec une adhésion du métal d'au moins 250gF/38mm. L'enduction du film PET avec un latex B associé à un réticulant X (80/20) donne les meilleurs résultats d'adhésion du métal Aluminium au film PET. L'aluminium est déposé par évaporation sous vide selon les conditions de procédé standard.
Comme on peut le voir des figures 2 et 3, l'adhésion du revêtement métal obtenues avec un latex déjà réticulé (latex B) est significativement accrue après une réticulation supplémentaire obtenue par l'ajout du réticulant. L'effet du réticulant est soutenu par la mesure du taux de gel (cf. Tableau 1) où l'on observe une augmentation du taux de gel lorsque l'on ajoute le réticulant X au latex B. Dans ce cas, la réticulation interfaciale est favorisée te la création de polarité à l'interface de particules donne de bons résultats d'adhésion du métal au support (voir figure 4) : les groupes mélamine génèrent des interactions avec les atomes d'aluminium en formant des chélates. Les performances d'adhésion sont donc accrues puisque ces groupements polaires sont plus accessibles à l'interface des particules par rapport au scénario avec le latex A puisque le réticulant X est distribué dans les particules de polymères et à l'interface des particules du fait du faible taux d gel de départ du latex A. (cf. Tableau 1).

**Exemple 7 - Propriétés d'adhésion et barrière d'un film PET enduit d'une couche de primaire d'accrochage (latex B+ réticulant X) et revêtu d'une couche de métal selon l'invention**

La figure 5 illustre les performances d'adhésion d'un revêtement métal (aluminium) en condition sèche et humide, le taux de transmission d'oxygène (PO2), le taux de transmission de la vapeur d'eau (PH2O), la densité optique (DO) de la couche métal revêtue sur un latex B avec ou sans réticulant X (C303LF) au ratio 80/20 et avec différentes épaisseurs d'enduit : PG correspond à « rouleau de petite gravure inversée » et GG correspond à « rouleau de grande gravure inversée».
Les mesures de perméabilité à l'oxygène sont réalisés avec l'OXTRAN 2/20 selon la norme ASTM F-1927 «Standard Test Method for determination of Oxygen Gas Transmission Rate, Permeance at Controlled Relative Humidity through Barrier Materials using a Coulometric Detector », les résultats sont exprimés en cc/$m^2$/jour.
Les mesures de perméabilité à la vapeur d'eau sont réalisées selon la norme ASTM F-1249 « Standard Test Method for Water Vapor Transmission Rate through Plastic Film and Sheeting using a Modulated Infrared Sensor », les résultats sont exprimés en g/$m^2$/jour. Les mesures de perméabilité à la vapeur d'eau des films sont réalisées sur le

Permatran-W®3/31 avec le logiciel Mocon - Water Vapor Permeation Analysis System.

A titre d'exemple la figure 5 montre que toutes les performances de cette formulation (Latex B+ Réticulant X ou C303 LF) sont largement influencées par l'épaisseur de l'enduit. L'épaisseur de l'enduit varie en fonction de deux paramètres :

- le contenu solide de la formulation à enduire (10, 15 et 20 % en poids du poids total de la formulation à enduire, et/ou
- la taille des rouleaux utilisés pour l'application de la dispersion avec le réticulant à enduire sur le film PET.

La figure 5 montre un accroissement significatif de l'adhésion métal avec le latex B et le réticulant X C303 LF) lorsque l'épaisseur d'enduit est faible et lorsque le latex B est réticulé encore plus durant l'étape de séchage de l'enduit. La figure 5 et le tableau 2 montrent que les propriétés barrières du latex B reticulé en outre avec le réticulant X C303 LF) sont significativement accrues par rapport au latex B d'origine. Il en va de même avec le latex A réticulé avec le réticulant X C303 LF) par rapport au latex A d'origine. Par conséquent, un réseau de polymères plus interpénétré se forme rendant plus difficile la pénétration de l'oxygène et de la vapeur d'eau au travers de l'enduit.

Tableau 2

| | PO2 (50% d'humidité, 23°C), cc/m$^2$/j | PH2O (90%, 38°C), g/m$^2$/j | Epaisseur de l'enduit (réalisée sur le PET enduit et avant l'étape de revêtement du métal) | Epaisseur de l'enduit estimée basée sur la consommation de la dispersion sur la ligne industrielle | OD (densité optique) |
|---|---|---|---|---|---|
| Latex B (20%ES, PG) | 11,14 | 0,86 | > 100 nm | | 2,4 |
| Latex B/X (80/20) (20% ES, PG) | 1,97 | 0,28 | 130± 20 nm | | 2,4 |
| Latex B/X (80/20) (10% ES, PG) | 1,45 | 0,18 | 63± 20 nm | | 2,4 |
| Latex B/X (80/20) (10% ES, GG) | 3,00 | 0,27 | 126± 20 nm | | 2,4 |
| Latex B/X (80/20) (15 % ES) | 1,00 | 0,30 | | 80 nm | 2,4 |
| Latex A | < 0,5 | 0,3-0,7 | | 80 nm | 2,4 |
| Latex A/X (80/20) (15% ES) | < 0,3 | < 0,3 | | 60 nm | 2,4 |
| Latex A/X (80/20) (20% ES) | < 0,3 | < 0,3 | | 80 nm | 2,4 |

Dans le tableau ci-dessus :

ES signifie Extrait Sec
PG signifie petite gravure et indique que l'enduction a été faite avec des rouleaux de petite taille
GG signifie grande gravure et indique que l'enduction a été faite avec des rouleaux de grande taille
X correspond au réticulant utilisé, à savoir le Cymel 303.
Le ratio Latex/Réticulant en poids sec/sec est exprimé entre parenthèse, par exemple (80/20).

Ce tableau permet également de montrer que les propriétés barrières s'améliorent avec la diminution de l'épaisseur de l'enduit jusqu'à une certaine limite. Ceci est corrélé à l'efficacité de réticulation lors de l'étape de séchage de l'enduit. Avec un enduit de faible épaisseur, on observe un durcissement plus efficace entre le latex B et le réticulant X grâce au procédé d'enduction en ligne. Par conséquent, un réseau de polymères plus interpénétré se forme rendant plus difficile la pénétration de l'oxygène et de la vapeur d'eau au travers de l'enduit.

**Revendications**

**1.** Procédé d'enduction d'un support avec au moins une couche de primaire d'accrochage, **caractérisé par** la mise en oeuvre des étapes suivantes :

a) on met en oeuvre un support,
b) éventuellement, on effectue un traitement physique de surface type corona ou plasma,
c) on enduit, sur au moins une face dudit support, une dispersion aqueuse comprenant :

- des particules de polymère(s) acrylique(s) et/ou méthacrylique(s) et présentant :

soit, d'une part, un taux de gel inférieur à 50 % en poids par rapport au poids total de polymère(s) acrylique(s) et/ou méthacrylique(s) et, d'autre part, un taux de copolymère(s) d'acide(s) acrylique(s) et/ou méthacrylique(s) d'au moins 10% du poids total de polymères,
soit un taux de gel d'au moins 50% en poids par rapport au poids total de polymère(s) acrylique(s) et/ou méthacrylique(s),

et
- au moins un réticulant, de préférence en solution aqueuse,

et on fait réticuler l'enduit pour réaliser une couche primaire permettant l'accrochage d'un revêtement, le taux résiduel de fonctions acides libres du(des) copolymère(s) en surface étant d'au moins 5% en poids par rapport au poids total de polymère(s)
les proportions de particules/réticulant pour les particules de polymère(s) acrylique(s) et/ou méthacrylique(s) présentant un taux de gel inférieur à 50 % en poids par rapport au poids total de polymère(s) acrylique(s) et/ou méthacrylique(s) et un taux de copolymère(s) d'acide(s) acrylique(s) et/ou méthacrylique(s) d'au moins 10% du poids total de polymères, étant de 80/20 (poids/poids).

**2.** Procédé selon la revendication 1, **caractérisé en ce qu'**il comprend en outre deux étapes d'étirage perpendiculaire du support dont au moins une étape est réalisée avant ou après les étapes b) ou c), afin d'obtenir un étirage final bi-dimensionnel.

**3.** Procédé selon la revendication 1 ou 2, **caractérisé en ce que** les étapes b) et c) sont effectuées en ligne.

**4.** Procédé selon l'une des revendications 1 à 3, **caractérisé en ce que** le support de l'étape a) est un film en polyester, de préférence en polyéthylène téréphtalate (PET), d'épaisseur A telle que :

$A \leq 150\ \mu m$,
de préférence $4\ \mu m \leq A \leq 100\ \mu m$,
plus préférentiellement $4\ \mu m \leq A \leq 40\ \mu m$,
plus préférentiellement encore $4\ \mu m \leq A \leq 12\ \mu m$.

**5.** Procédé selon l'une des revendications 1 à 4, **caractérisé en ce que** la couche primaire d'accrochage a une épaisseur E telle que :

$E \leq 200$ nm,
de préférence $40\ nm \leq E \leq 120$ nm,
plus préférentiellement $50\ nm \leq E \leq 100$ nm,
plus préférentiellement encore $60\ nm \leq E \leq 90$ nm.

**6.** Procédé de revêtement d'un support enduit d'au moins une couche de primaire d'accrochage tel qu'obtenu par le

procédé tel que défini dans l'une quelconque des revendications 2 à 5, **caractérisé en ce qu'**il comprend une étape d'application d'un revêtement apte à réagir avec la couche primaire d'accrochage.

7. Procédé selon la revendication 6 **caractérisé en ce que** ledit revêtement comprenant :

   - au moins une couche d'au moins un métal et/ou au moins un oxyde métallique, ou
   - au moins une couche d'encre, ou
   - au moins une couche d'adhésif.

8. Procédé selon la revendication 7, **caractérisé en ce que** le revêtement consiste en une couche de métal et/ou d'oxyde métallique, le métal (ou les métaux) étant choisi(s) parmi l'aluminium, le cuivre, le nickel, l'argent, l'or, et leurs alliages et le(s) oxyde(s) métallique(s) étant choisi(s) parmi les oxydes de l'aluminium, de silicium, de cuivre, de nickel, d'argent et leurs mélanges.

9. Procédé selon l'une quelconque des revendications précédentes, **caractérisé en ce qu'**au moins une partie de la surface du support est modifiée par une décharge électrique de type corona sous air ambiant ou gaz, à des pressions partielles élevées, préférablement entre 100 mbar et 3000 mbar, encore plus préférablement à la pression atmosphérique.

10. Article choisi dans le groupe constitué par des emballages alimentaires et non-alimentaires, les films ou feuilles pour l'art graphique, comme impression ou dessin, les films ou feuilles pour la décoration et les films ou feuilles pour la protection de support, **caractérisé en ce qu'**il comprend un support tel qu'obtenu à l'issu du procédé tel que défini dans l'une des revendications 6 à 9.

11. Dispersion aqueuse, notamment pour la mise en oeuvre du procédé selon l'une quelconque des revendications 1 à 9, **caractérisé en ce qu'**elle comprend :

    i) des particules de polymère(s) acrylique(s) et/ou méthacrylique(s) présentant soit, d'une part, un taux de gel inférieur à 50% en poids par rapport au poids total de polymère(s) acrylique(s) et/ou méthacrylique(s) et, d'autre part, un taux de copolymère(s) d'acide(s) acryliques et/ou méthacryliques d'au moins 10% du poids total de polymère(s), soit un taux de gel d'au moins 50% en poids par rapport au poids total de polymère(s) acrylique(s) et/ou méthacrylique(s), et
    ii) au moins un réticulant, apte à permettre une réticulation interfaciale, présent en quantité telle que la réticulation interfaciale des particules de polymère(s) acrylique(s) et/ou méthacrylique(s) conduise à un taux résiduel d'au moins 5% en poids de fonctions acides libres du(des) copolymère(s) en surface par rapport au poids total de polymère(s)

    les proportions de particules/réticulant pour les particules de polymère(s) acrylique(s) et/ou méthacrylique(s) présentant un taux de gel inférieur à 50 % en poids par rapport au poids total de polymère(s) acrylique(s) et/ou méthacrylique(s) et un taux de copolymère(s) d'acide(s) acrylique(s) et/ou méthacrylique(s) d'au moins 10% du poids total de polymères, étant de 80/20 (poids/poids).

**Patentansprüche**

1. Verfahren zum Beschichten eines Trägers mit wenigstens einer Primer-Schicht, **gekennzeichnet durch** die Ausführung der folgenden Schritte:

   a) Herstellen eines Trägers,
   b) ggf. Anwenden einer physikalischen Oberflächenbehandlung vom Corona- oder Plasma-Typ,
   c) Beschichten wenigstens einer Seite des Trägers mit einer wässrigen Dispersion, welche umfasst:

      - Acrylpolymer- und/oder Methacrylpolymer-Partikel, umfassend:

        entweder, einerseits einen Gel-Anteil kleiner 50 Gewichtsprozent bezogen auf das Acryl- und/oder Methacrylpolymer-Gesamtgewicht und andererseits einen Acrylsäure- und/oder Methacrylsäure-Copolymer-Gehalt von wenigstens 10% des Polymer-Gesamtgewichts,
        oder, einen Gelgehalt von wenigstens 50 Gewichtsprozent bezogen auf das Acryl- und/oder Methacrylpolymer-Gesamtgewicht,

und
- wenigstens ein Vernetzungsmittel, bevorzugt in wässriger Lösung,

sowie die Vernetzung der Beschichtung zur Herstellung einer Primer-Schicht, die das Anhaften einer Beschichtung erlaubt, wobei das Restverhältnis an freien Säurefunktionen des/der Copolymers(e) an der Oberfläche wenigstens 5 Gewichtsprozent bezogen auf das Polymer-Gesamtgewicht beträgt,
wobei die Anteile von Partikeln/Vernetzungsmittel für die Acrylpolymer- und/oder Methacrylpolymer-Partikel, umfassend einen Gel-Anteil kleiner 50 Gewichtsprozent bezogen auf das Acryl- und/oder Methacrylpolymer-Gesamtgewicht und einen Acrylsäure- und/oder Methacrylsäure-Copolymer-Gehalt von wenigstens 10% des Polymer-Gesamtgewichts, 80/20 (Gewicht/Gewicht) betragen.

**2.** Verfahren nach Anspruch 1, **dadurch gekennzeichnet, dass** es ferner zwei Schritte der senkrechten Dehnung des Trägers umfasst, wobei wenigstens ein Schritt vor oder nach den Schritten b) oder c) ausgeführt wird, um eine abschließende zweidimensionale Dehnung zu erhalten.

**3.** Verfahren nach Anspruch 1 oder 2, **dadurch gekennzeichnet, dass** die Schritte b) und c) linear ausgeführt werden.

**4.** Verfahren nach einem der Ansprüche 1 bis 3, **dadurch gekennzeichnet, dass** der Träger aus Schritt a) ein Polyesterfilm ist, vorzugsweise ein Polyethylenterephthalat (PET) der Dicke A mit:

$A \leq 150\ \mu m$,
bevorzugt $4\ \mu m \leq A \leq 100\ \mu m$,
stärker bevorzugt $4\ \mu m \leq A \leq 40\ \mu m$,
noch stärker bevorzugt $4\ \mu m \leq A \leq 12\ \mu m$.

**5.** Verfahren nach einem der Ansprüche 1 bis 4, **dadurch gekennzeichnet, dass** die Primer-Schicht eine Dicke E aufweist, mit:

$E \leq 200$ nm,
bevorzugt $40\ nm \leq E \leq 120$ nm,
stärker bevorzugt $50\ nm \leq E \leq 100$ nm,
noch stärker bevorzugt $60\ nm \leq E \leq 90$ nm.

**6.** Verfahren zum Beschichten eines Trägers mit wenigstens einer Primer-Schicht, die gemäß dem Verfahren nach einem der Ansprüche 2 bis 5 erhalten wurde, **dadurch gekennzeichnet, dass** es einen Schritt des Aufbringens einer Beschichtung umfasst, die mit der Primer-Schicht reagieren kann.

**7.** Verfahren nach Anspruch 6, **dadurch gekennzeichnet, dass** die Beschichtung umfasst:

- wenigstens eine Schicht wenigstens eines Metalls und/oder wenigstens eines Metalloxids, oder
- wenigstens eine Tintenschicht, oder
- wenigstens eine Haftschicht.

**8.** Verfahren nach Anspruch 7, **dadurch gekennzeichnet, dass** die Beschichtung aus einer Metallschicht und/oder Metalloxidschicht besteht, wobei das Metall (oder die Metalle) gewählt wird/werden aus Aluminium, Kupfer, Nickel, Silber, Gold, und ihren Legierungen, und/oder wobei das/die Metalloxid(e) gewählt wird/werden aus Aluminium-, Silizium-, Kupfer-, Nickel-, Silberoxiden und ihren Mischungen.

**9.** Verfahren nach einem der vorhergehenden Ansprüche, **dadurch gekennzeichnet, dass** wenigstens ein Teil der Fläche des Trägers durch eine elektrische Entladung vom Corona-Typ verändert wird, unter Umgebungsluft oder Gas, bei erhöhten Teildrücken, vorzugsweise zwischen 100 mbar und 3000 mbar, noch stärker bevorzugt bei atmosphärischem Druck.

**10.** Artikel, welcher gewählt ist aus der Gruppe, umfassend Verpackungen aus dem Food- und Non-Food-Bereich, Filme oder Folien für graphische Kunst, wie Druck oder Zeichnung, Filme oder Folien zur Dekoration und Filme oder Folien für den Trägerschutz, **dadurch gekennzeichnet, dass** er einen Träger umfasst, welcher durch das

Verfahren nach einem der Ansprüche 6 bis 9 erhalten wurde.

**11.** Wässrige Dispersion, insbesondere für die Durchführung des Verfahrens nach einem der Ansprüche 1 bis 9, **dadurch gekennzeichnet**, das sie umfasst:

i) Acrylpolymer- und/oder Methacrylpolymer-Partikel, umfassend:

entweder, einerseits einen Gel-Anteil kleiner 50 Gewichtsprozent bezogen auf das Acryl- und/oder Methacrylpolymer-Gesamtgewicht und andererseits einen Acrylsäure- und/oder Methacrylsäure-Copolymer-Gehalt von wenigstens 10% des Polymer-Gesamtgewichts, oder, einen Gelgehalt von wenigstens 50 Gewichtsprozent bezogen auf das Acryl- und/oder Methacrylpolymer-Gesamtgewicht, und

ii) wenigstens ein Vernetzungsmittel, welches eine Zwischenvernetzung ermöglicht und in einer solchen Menge vorliegt, dass die Zwischenvernetzung der Acryl- und/oder Methacrylpolymerpartikel zu einem Restverhältnis an freien Säurefunktionen des/der Copolymers/e an der Oberfläche von wenigstens 5 Gewichtsprozent bezogen auf das Polymer-Gesamtgewicht führt,

wobei die Anteile von Partikeln/Vernetzungsmittel für die Acrylpolymer- und/oder Methacrylpolymer-Partikel, umfassend einen Gel-Anteil kleiner 50 Gewichtsprozent bezogen auf das Acryl- und/oder Methacrylpolymer-Gesamtgewicht und einen Acrylsäure- und/oder Methacrylsäure-Copolymer-Gehalt von wenigstens 10% des Gesamtgewichts der Polymere, 80/20 (Gewicht/Gewicht) betragen.

## Claims

**1.** Method for coating a support with at least one coat of bonding primer, **characterized by** the implementation of the following steps:

a) a support is implemented,
b) optionally, a physical surface treatment of the corona or plasma type is carried out,
c) at least one face of said support is coated with an aqueous dispersion comprising:

- particles of acrylic and/or methacrylic polymer(s) having:

either, on the one hand, a gel content below 50% by weight relative to the total weight of acrylic and/or methacrylic polymer(s) and, on the other hand, a content of copolymer(s) of acrylic and/or methacrylic acid(s) of at least 10% of the total weight of the polymers,
or a gel content of at least 50% by weight relative to the total weight of acrylic and/or methacrylic polymer(s),

and
- at least one cross-linking agent, preferably in aqueous solution,

and the coating is made to cross-link in order to produce a primer coat allowing the bonding of a covering, the residual content of free acid functions of the copolymer(s) at the surface being at least 5% by weight relative to the total weight of polymer(s) the proportions of particles/cross-linking agent for the particles of acrylic and/or methacrylic polymer(s) having a gel content below 50% by weight relative to the total weight of acrylic and/or methacrylic polymer(s) and a content of copolymer(s) of acrylic and/or methacrylic acid(s) of at least 10% of the total weight of the polymers, being 80/20 (weight/weight).

**2.** Method according to claim 1, **characterized in that** it further comprises two steps of perpendicular stretching of the support, at least one step of which is carried out before or after steps b) or c), in order to obtain a two-dimensional final stretching.

**3.** Method according to claim 1 or 2, **characterized in that** steps b) and c) are carried out in-line.

**4.** Method according to one of claims 1 to 3, **characterized in that** the support in step a) is a polyester film, preferably of polyethylene terephthalate (PET), with a thickness A such that:

A ≤ 150 μm,
preferably 4 μm ≤ A ≤ 100 μm,
more preferably 4 μm ≤ A ≤ 40 μm,
even more preferably 4 μm ≤ A ≤ 12 μm.

**5.** Method according to one of claims 1 to 4, **characterized in that** the bonding primer coat has a thickness E such that:

E ≤ 200 nm,
preferably 40 nm ≤ E ≤ 120 nm,
more preferably 50 nm ≤ E ≤ 100 nm,
even more preferably 60 nm ≤ E ≤ 90 nm.

**6.** Method for covering a support coated with at least one coat of bonding primer as obtained by the method as defined in any one of claims 2 to 5, **characterized in that** it comprises a step of application of a covering capable of reacting with the bonding primer coat.

**7.** Method according to claim 6, **characterized in that** said covering comprises:

- at least one layer of at least one metal and/or at least one metal oxide, or
- at least one layer of ink, or
- at least one layer of adhesive.

**8.** Method according to claim 7, **characterized in that** the covering consists of a layer of metal and/or of metal oxide, the metal (or metals) being selected from aluminium, copper, nickel, silver, gold, and alloys thereof, and the metal oxide(s) being selected from the oxides of aluminium, silicon, copper, nickel, silver and mixtures thereof.

**9.** Method according to any one of the preceding claims, **characterized in that** at least one portion of the surface of the support is modified by an electric discharge of the corona type under ambient air or gas, at high partial pressures, preferably between 100 mbar and 3000 mbar, even more preferably at atmospheric pressure.

**10.** Article selected from the group constituted by food and non-food packaging, films or sheets for graphic art, like printing or drawing, films or sheets for decoration and films or sheets for support protection, **characterized in that** it comprises a support as obtained at the end of the method as defined in one of claims 6 to 9.

**11.** Aqueous dispersion, in particular for carrying out the method according to any one of claims 1 to 9, **characterized in that** it comprises:

i) particles of acrylic and/or methacrylic polymer(s) having either, on the one hand, a gel content below 50% by weight relative to the total weight of acrylic and/or methacrylic polymer(s) and, on the other hand, a content of copolymer(s) of acrylic and/or methacrylic acid(s) of at least 10% of the total weight of the polymer(s), or a gel content of at least 50% by weight relative to the total weight of acrylic and/or methacrylic polymer(s), and
ii) at least one cross-linking agent, suitable for allowing interfacial cross-linking, present in an quantity such that the interfacial cross-linking of the particles of acrylic and/or methacrylic polymer(s) leads to a residual content of at least 5% by weight of free acid functions of the copolymer(s) at the surface relative to the total weight of polymer(s)

the proportions of particles/cross-linking agent for the particles of acrylic and/or methacrylic polymer(s) having a gel content below 50% by weight relative to the total weight of acrylic and/or methacrylic polymer(s) and a content of copolymer(s) of acrylic and/or methacrylic acid(s) of at least 10% of the total weight of the polymers, being 80/20 (weight/weight).

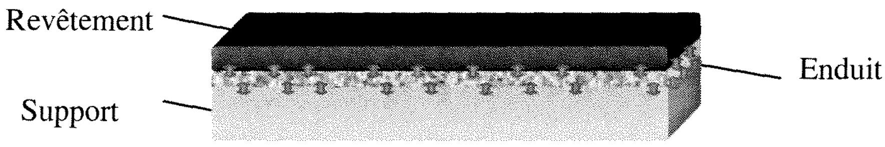


**Figure 1**

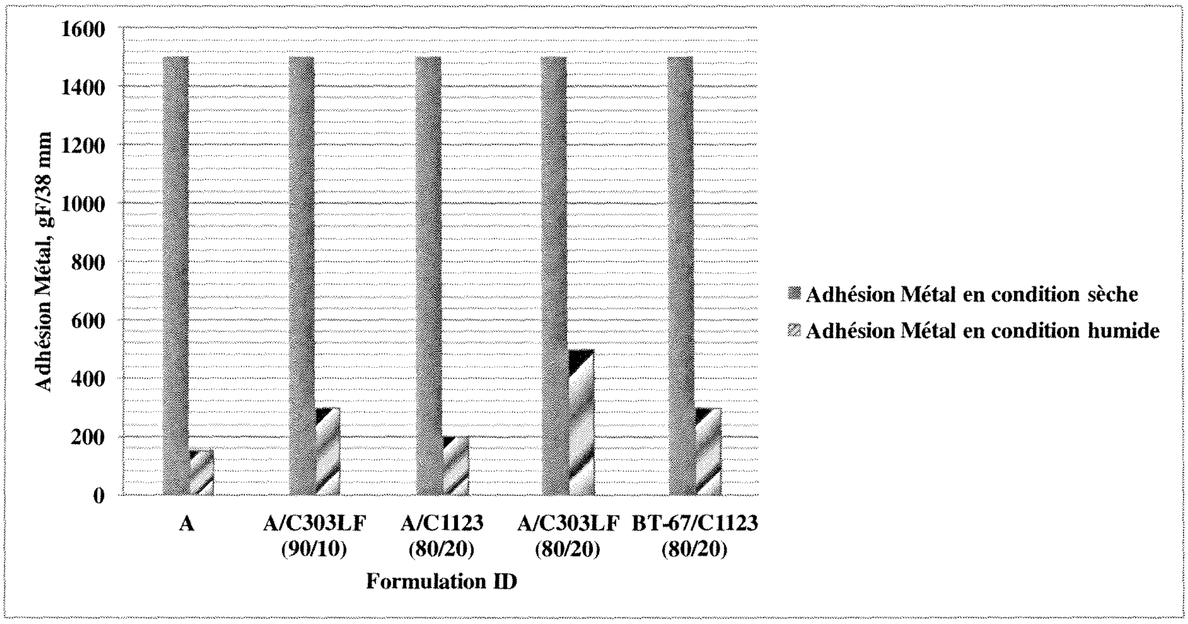


**Figure 2**

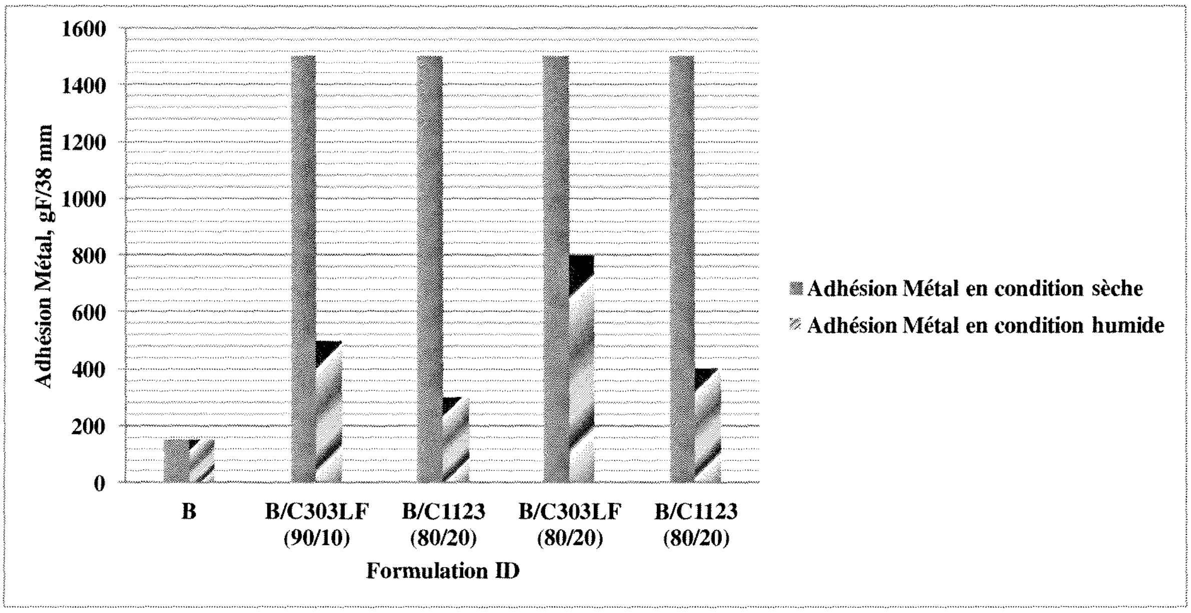


**Figure 3**

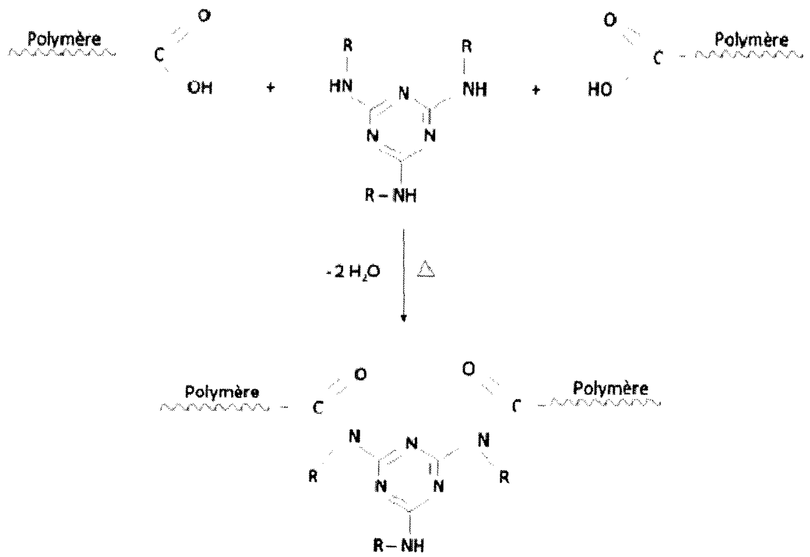


Figure 4

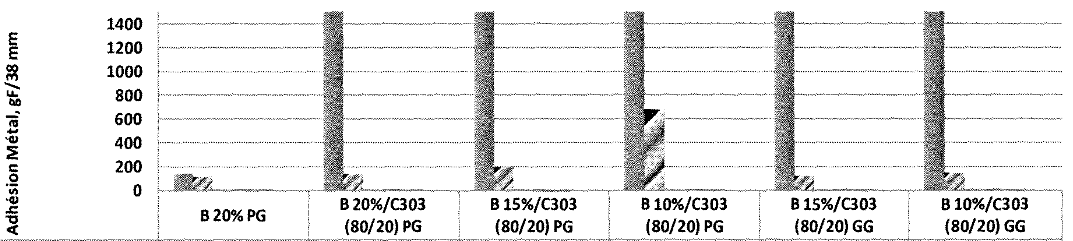


| | B 20% PG | B 20%/C303 (80/20) PG | B 15%/C303 (80/20) PG | B 10%/C303 (80/20) PG | B 15%/C303 (80/20) GG | B 10%/C303 (80/20) GG |
|---|---|---|---|---|---|---|
| Adhésion Métal en condition sèche | 140 | 1500 | 1500 | 1500 | 1500 | 1500 |
| Adhésion Métal en condition humidet | 113 | 140 | 194 | 675 | 123 | 150 |
| PO2 (23°C, 50%HR), cc/m2/d | 11,14 | 1,97 | 2,22 | 1,45 | 3,76 | 3 |
| DO | 2,41 | 2,37 | 2,48 | 2,4 | 2,55 | 2,36 |
| PH2O (38°C, 90%HR), mg/m2/d | 0,86 | 0,28 | 0,95 | 0,18 | 0,30 | 0,27 |
| Epaisseur du primaire d'accroche, nm | | 130 | | 63 | | 126 |

Figure 5

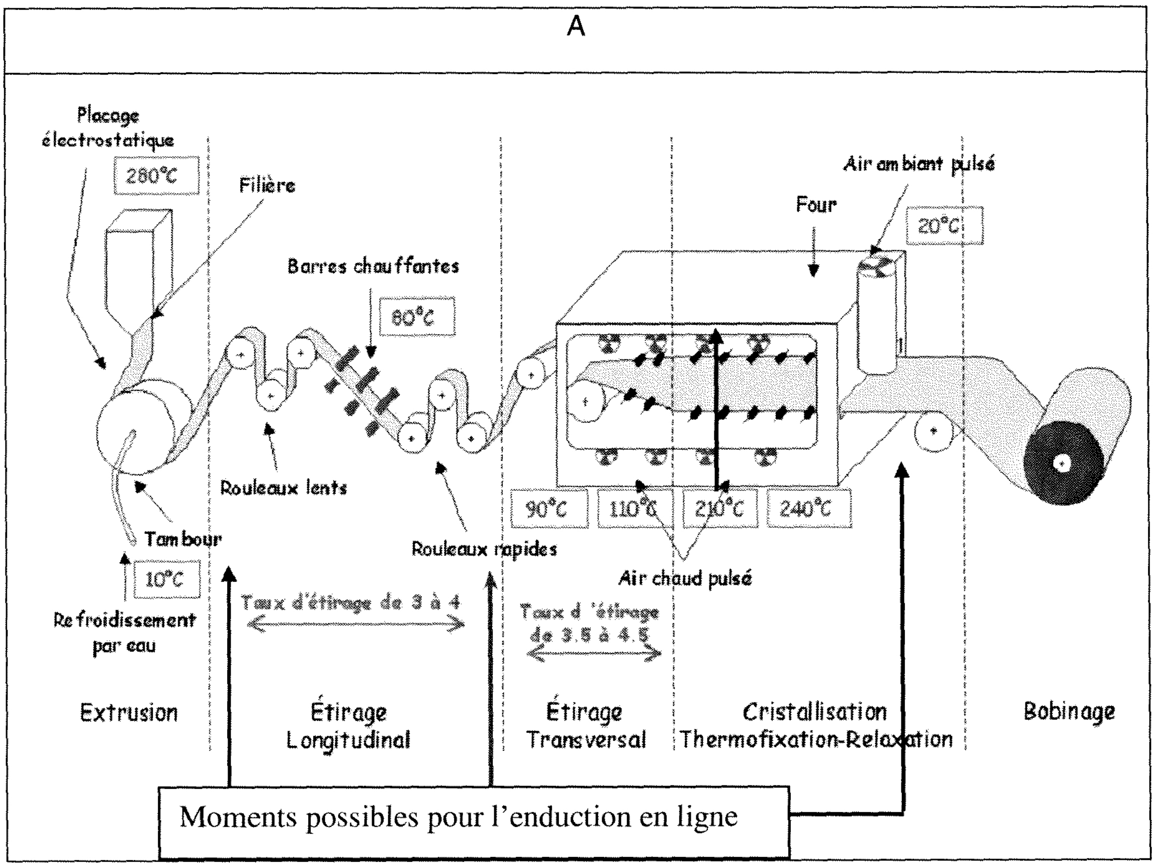


**Figure 6 a**

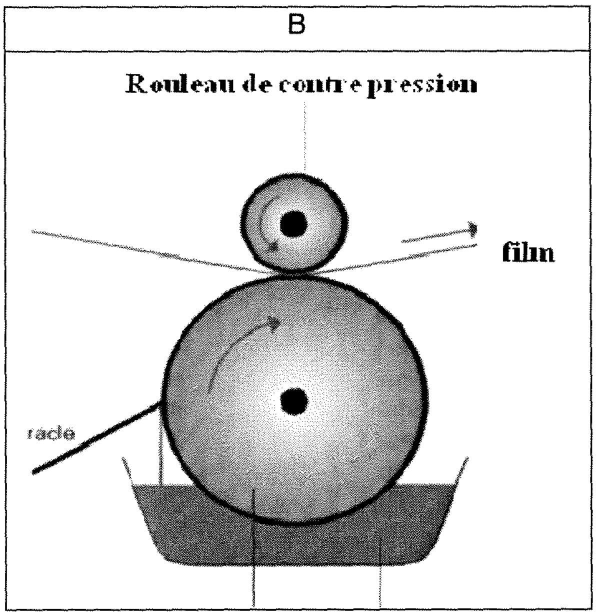


**Figure 6 b**

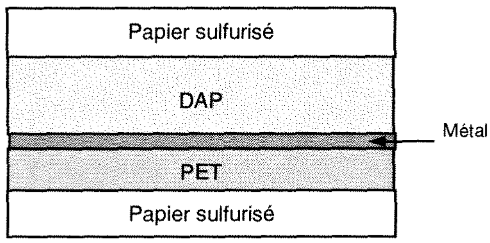


**Figure 7**

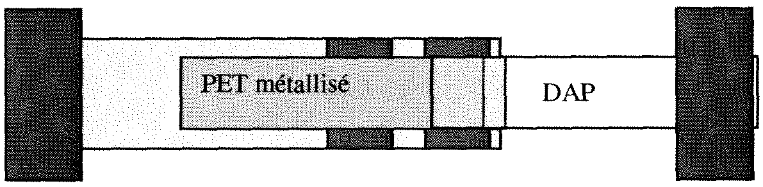


**Figure 8**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 2794742 A
- US 2627088 A
- FR 1428831
- EP 0260203 B1
- EP 0400801 A2